# EUROPEAN PATENT SPECIFICATION

(11) **EP 2 981 036 B1**
(45) Date of publication and mention of the grant of the patent: **03.10.2018**
(21) Application number: 14784835.2
(22) Date of filing: 21.04.2014
(51) Int. Cl.: H04L 12/761, H04L 12/18

(54) **MULTICAST COMMUNICATION METHOD AND AGGREGATION SWITCH**
MULTICAST-KOMMUNIKATIONSVERFAHREN UND KOMBINATIONSSCHALTER
PROCÉDÉ DE COMMUNICATION EN MULTIDIFFUSION ET COMMUTATEUR D'AGRÉGATION

(30) Priority: 19.04.2013 CN 201310137909
(43) Date of publication of application: 03.02.2016
(73) Proprietor: Huawei Technologies Co., Ltd., Longgang District Shenzhen, Guangdong 518129 (CN)
(72) Inventor: HAO, Weiguo, Shenzhen Guangdong 518129 (CN); LIU, Yisong, Shenzhen Guangdong 518129 (CN)
(74) Representative: Pfenning, Meinig & Partner mbB
(86) International application number: PCT/CN2014/075760
(87) International publication number: WO 2014/169856

(56) References cited:
- CN-A- 101 005 434
- CN-A- 102 761 493
- CN-A- 103 036 787
- GROVER D RAO D FARINACCI CISCO SYSTEMS H: "Overlay Transport Virtualization; draft-hasmit-otv-00.txt", OVERLAY TRANSPORT VIRTUALIZATION; DRAFT-HASMIT-OTV-00.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 13 April 2010 (2010-04-13), pages 1-16, XP015067370, [retrieved on 2010-04-13]
- EASTLAKE HUAWEI A BANERJEE D DUTT CISCO R PERLMAN INTEL A GHANWANI BROCADE D: "Transparent Interconnection of Lots of Links (TRILL) Use of IS-IS; rfc6326.txt", TRANSPARENT INTERCONNECTION OF LOTS OF LINKS (TRILL) USE OF IS-IS; RFC6326.TXT, INTERNET ENGINEERING TASK FORCE, IETF; STANDARD, INTERNET SOCIETY (ISOC) 4, RUE DES FALAISES CH- 1205 GENEVA, SWITZERLAND, 22 July 2011 (2011-07-22), pages 1-25, XP015076095, [retrieved on 2011-07-22]
- WARD CISCO SYSTEMS R PERLMAN SUN MICROSYSTEMS R WHITE D FARINACCI A BANERJEE CISCO SYSTEMS D: "Carrying Attached Addresses in IS-IS; draft-ward-l2isis-03.txt", 5. JCT-VC MEETING; 96. MPEG MEETING; 16-3-2011 - 23-3-2011; GENEVA; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/, INTERNET ENGINEERING TASK FORCE, IETF, CH, no. 3, 22 May 2008 (2008-05-22), XP015057094, ISSN: 0000-0004

## Description

### TECHNICAL FIELD

The present invention relates to the communications field, and in particular, to a multicast communications method and an aggregation switch.

### BACKGROUND

A TRILL (Transparent Interconnect of Lots of Links, Transparent Interconnection of Lots of Links) network is a network formed by RB (Route Bridge, routing bridge device) devices on which the TRILL protocol runs. The TRILL network may be applied to multiple types of scenarios; when the TRILL network is applied in an IPTV (Internet Protocol Television, Internet Protocol television) scenario, an AGG (Aggregation Switch, aggregation switch) and an ACC (Access Switch, access switch) are connected to form the TRILL network, where the AGG is connected to a multicast router, the ACC is connected to a receiver of a multicast group, and a last-hop router in the multicast router is connected to a multicast source. The receiver of the multicast group sends an IGMP (Internet Group Management Protocol, Internet Group Management Protocol) packet to the ACC, and the ACC transforms the IGMP packet to an LSP (Link State PDU, link state protocol data unit) packet carrying a Group Address TLV (Group Address Tag-Length-Value, multicast group address type-length-value) to order a program of the multicast source. In particular, the LSP packet carrying the Group Address TLV is called a GM LSP (Group Mac Link State PDU, multicast group address link state protocol data unit) packet, and the GM LSP packet needs to pass the AGG and the router connected to the AGG, and be transferred to the last-hop router, so that the last-hop router acquires a multicast stream from the multicast source, and transfers the multicast stream to the receiver of the multicast group through a network.

In the prior art, the GM LSP packet is sent between the AGG and a first multicast router in a static multicast manner, where the first multicast router is a multicast router directly connected to the AGG, which cannot implement on-demand replication of multicast traffic, and there is a waste of link bandwidth between the AGG and the first multicast router.

### SUMMARY

Embodiments of the present invention provide a multicast communications method and an aggregation switch, which can implement on-demand replication of multicast traffic and save link bandwidth.

In order to achieve the foregoing objectives, the embodiments of the present invention adopt the following technical solutions:
According to a first aspect, the present invention provides a multicast communications method, applied to an AGG and including:
acquiring a GM LSP packet sent by an ACC;
comparing multicast join information in the GM LSP packet with multicast join information that is stored in the AGG and updated last time, to obtain a comparison result, and updating, according to the comparison result, the multicast join information stored in the AGG;
when there is changed multicast join information in the comparison result, generating, according to the comparison result, a preset-protocol packet according to a preset format, where the preset-protocol packet is an IGMP (Internet Group Management Protocol, Internet Group Management Protocol) packet or a PIM (Protocol Independent Multicast, Protocol Independent Multicast) packet; and
sending the preset-protocol packet to a first multicast router, so that the first multicast router generates a multicast forwarding entry according to the preset-protocol packet.

With reference to the first aspect, in a first possible implementation manner of the first aspect, the GM LSP packet is a TRILL LSP packet; and the multicast join information in the multicast stream to the receiver of the multicast group through a network.

In the prior art, the GM LSP packet is sent between the AGG and a first multicast router in a static multicast manner, where the first multicast router is a multicast router directly connected to the AGG, which cannot implement on-demand replication of multicast traffic, and there is a waste of link bandwidth between the AGG and the first multicast router.

"Overlay Transport Virtualization" (H. Grover et. al.) discloses that Overlay Transport Virtualization (OTV) provides a scalable solution for L2/L3 connectivity across different sites using the currently deployed service provider and enterprise networks. It is a very cost-effective and simple solution requiring deployment of a one or more OTV functional device at each of the enterprise sites. This solution is agnostic to the technology used in the service provider network and connectivity between the enterprise and the service provider network. This document provides an overview of this technology.

"Transparent interconnection of lots of links (TRILL) use of IS-IS" (D. Eastlake et. al.) specifies the data formats and code points for the IS-IS extensions to support TRILL.

"Carrying Attached Addresses in IS-IS" (D. Ward et. al.) specifies the IS-IS extensions necessary to support multi-link IPv4 and IPv6 networks, as well as to provide true link state routing to any protocols running directly over layer 2.

### SUMMARY

Embodiments of the present invention provide a multicast communications method and an aggregation switch according to the independent claims, which can implement on-demand replication of multicast traffic and save link bandwidth.

The embodiments of the present invention provide a multicast communications method and an aggregation switch. The multicast communications method includes: acquiring, by an AGG, a GM LSP packet sent by an ACC; comparing multicast join information in the GM LSP packet with multicast join information that is stored in the AGG and undated last time, to obtain a comparison result, and updating, according to the comparison result, the multicast join information stored in the AGG; when there is changed multicast join information in the comparison result, generating, according to the comparison result, a preset-protocol packet according to a preset format, where the preset-protocol packet is an Internet Group Management Protocol IGMP packet or a Protocol Independent Multicast PIM packet; and sending the preset-protocol packet to a first multicast router, so that the first multicast router generates a multicast forwarding entry according to the preset-protocol packet. In this way, the acquired GM LSP packet is compared with the GM LSP packet stored in the AGG; and when there is the changed multicast join information in the comparison result, the preset-protocol packet is generated according to the comparison result, and the preset-protocol packet is sent to the first multicast router, where the comparison result includes newly added or reduced multicast group information, or includes newly added or reduced multicast source information and multicast group information. Compared with the prior art, the newly added or reduced multicast group information, or the newly added or reduced multicast source information and multicast group information is actively sent to the first multicast router, which implements on-demand sending on a path from the AGG to the first multicast router, thereby saving link bandwidth from the AGG to the first multicast router.

With reference to the third possible implementation manner of the first aspect, in a fourth possible implementation manner of the first aspect, when the preset format is the V1 format or the V2 format, and when there is the newly added multicast group information in the comparison result, the generating, according to the comparison result, an IGMP packet according to the preset format includes:
generating, by the AGG, a first IGMP report packet according to the newly added multicast join information in the comparison result, where the first IGMP report packet is generated according to the newly added multicast group information;
when the preset format is the V3 format, and when there is the newly added multicast group information in the comparison result, or there is the newly added multicast source information and multicast group information in the comparison result, the generating, according to the comparison result, an IGMP packet according to the preset format includes:
   generating, by the AGG, an allow packet according to the newly added multicast join information in the comparison result, where the allow packet is generated according to the newly added multicast group information or according to the newly added multicast source information and multicast group information;
   when the preset format is the V1 format or the V2 format, and when there is the reduced multicast group information in the comparison result, the generating, according to the comparison result, an IGMP packet according to the preset format includes:
      generating, by the AGG, a leave indication packet according to the reduced multicast join information in the comparison result, where the leave indication packet is generated according to the reduced multicast group information; and
      when the preset format is the V3 format, and when there is the reduced multicast group information in the comparison result, or there is the reduced multicast source information and multicast group information in the comparison result, the generating, according to the comparison result, an IGMP packet according to the preset format includes:
         generating, by the AGG, a leave packet according to the reduced multicast join information in the comparison result, where the leave packet is generated according to the reduced multicast group information or according to the reduced multicast source information and multicast group information.

With reference to the third possible implementation manner of the first aspect, in a fifth possible implementation manner of the first aspect, when the preset format is the V2 format, or when the preset format is the V3 format, the generating, according to the comparison result, an IGMP packet according to the preset format includes:
receiving, by the AGG, a group-specific query packet sent by the first multicast router, where the group-specific query packet includes a specific VLAN identifier; and
generating, by the AGG, a second IGMP report packet according to the comparison result, where the second IGMP report packet is generated according to the updated multicast join information that is stored in the AGG and updated last time.

With reference to the third possible implementation manner of the first aspect, in a sixth possible implementation manner of the first aspect, when the preset-protocol packet is a PIM packet,
when there is the newly added multicast group information in the comparison result, the generating, according to the comparison result, a preset-protocol packet according to a preset format includes:
generating, by the AGG, a PIM SM Join (Protocol Independent Multicast Service Message Join, Protocol Independent Multicast service join message) according to the newly added multicast join information in the comparison result, where the PIM SM Join is generated according to the newly added multicast group information;
when there is the newly added multicast source information and multicast group information in the comparison result, the generating, according to the comparison result, a preset-protocol packet according to a preset format includes:
   generating, by the AGG, a PIM SSM Join (Protocol Independent Multicast Source Specific Multicast Join, Protocol Independent Multicast source specific multicast join message) according to the added multicast join information in the comparison result, where the PIM SSM Join is generated according to the newly added multicast source information and multicast group information;
   when there is the reduced multicast group information in the comparison result, the generating, according to the comparison result, a preset-protocol packet according to a preset format includes:
      generating, by the AGG, a PIM SM Prune (Protocol Independent Multicast Service Message Prune, Protocol Independent Multicast service prune message) according to the reduced multicast join information in the comparison result, where the PIM SM Prune is used to delete the reduced multicast group information; and
      when there is the reduced multicast source information and multicast group information in the comparison result, the generating, according to the comparison result, a preset-protocol packet according to a preset format includes:
         generating, by the AGG, a PIM SSM Prune (Protocol Independent Multicast Source Specific Multicast Prune, Protocol Independent Multicast source specific multicast prune message) according to the reduced multicast join information in the comparison result, where the PIM SSM Prune is used to delete the reduced multicast source information and multicast group information.

According to a second aspect, the present invention provides an AGG, including:
an acquiring unit, configured to acquire a GM LSP packet sent by an ACC;
a storage unit, configured to store multicast join information that is updated last time;
a comparing unit, configured to compare multicast join information in the GM LSP packet acquired by the acquiring unit with the multicast join information in the storage unit, to obtain a comparison result, send the comparison result to a generating unit, and update the multicast join information in the storage unit according to the comparison result;
the generating unit, configured to receive the comparison result sent by the comparing unit, and when there is changed multicast join information in the comparison result, generate, according to the comparison result, a preset-protocol packet according to a preset format, where the preset-protocol packet is an Internet Group Management Protocol IGMP packet or a Protocol Independent Multicast PIM packet; and
a sending unit, configured to send the preset-protocol packet generated by the generating unit to a first multicast router, so that the first multicast router generates a multicast forwarding entry according to the preset-protocol packet.

With reference to the second aspect, in a first possible implementation manner of the second aspect, the GM LSP packet is a TRILL LSP packet; and the multicast join information in the GM LSP packet includes: a VLAN identifier and multicast group information corresponding to the VLAN identifier, or the multicast join information in the GM LSP packet includes: a VLAN identifier and multicast source information and multicast group information that are corresponding to the VLAN identifier.

With reference to the second aspect and the first possible implementation manner of the second aspect, in a second possible implementation manner of the second aspect, the comparing unit is specifically configured to:
when the multicast join information in the GM LSP packet includes a VLAN identifier and multicast group information corresponding to the VLAN identifier,
classify and combine, according to the VLAN identifier, the multicast join information stored in the storage unit, to obtain first multicast join information, where the first multicast join information is each VLAN identifier and multicast group information corresponding to each VLAN identifier that are stored in the AGG;
classify and combine, according to the VLAN identifier, the multicast join information in the GM LSP packet acquired by the acquiring unit, to obtain second multicast join information, where the second multicast join information is each VLAN identifier and multicast group information corresponding to each VLAN identifier that are in the GM LSP packet; and
compare the first multicast join information with the second multicast join information to obtain the comparison result, where the comparison result includes:
   when the first multicast join information is compared with the second multicast join information, and there is newly added multicast group information in a specific VLAN of the second multicast join information, the comparison result includes the newly added multicast group information; and
   when the first multicast join information is compared with the second multicast join information, and there is reduced multicast group information in a specific VLAN of the second multicast join information, the comparison result includes the reduced multicast group information; or
   when the multicast join information in the GM LSP packet includes a VLAN identifier and multicast source information and multicast group information that are corresponding to the VLAN identifier,
   classify and combine, according to the VLAN identifier, the multicast join information stored in the storage unit, to obtain first multicast join information, where the first multicast join information is each VLAN identifier and multicast source information and multicast group information corresponding to each VLAN identifier that are stored in the AGG;
   classify and combine, according to the VLAN identifier, the multicast join information in the GM LSP packet acquired by the acquiring unit, to obtain second multicast join information, where the second multicast join information is each VLAN identifier and multicast source information and multicast group information corresponding to each VLAN identifier that are stored in the GM LSP packet; and
   compare the first multicast join information with the second multicast join information to obtain the comparison result, where the comparison result includes:
      when the first multicast join information is compared with the second multicast join information, and there is newly added multicast source information and multicast group information in a specific VLAN of the second multicast join information, the comparison result includes the newly added multicast source information and multicast group information; and
      when the first multicast join information is compared with the second multicast join information, and there is reduced multicast source information and multicast group information in a specific VLAN of the second multicast join information, the comparison result includes the reduced multicast source information and multicast group information.

With reference to the second possible implementation manner of the second aspect, in a third possible implementation manner of the second aspect, when the preset-protocol packet is an IGMP packet, the generating unit is specifically configured to:
receive the comparison result sent by the comparing unit, and generate, according to the comparison result, an IGMP packet according to the preset format, where the preset format includes: a V1 format, a V2 format, or a V3 format, where V1, V2, and V3 are version numbers of the IGMP protocol.

With reference to the third possible implementation manner of the second aspect, in a fourth possible implementation manner of the second aspect, when the preset format is the V1 format or the V2 format, and there is the newly added multicast group information in the comparison result, the generating unit is specifically configured to:
receive the comparison result sent by the comparing unit, and generate a first IGMP report packet according to the newly added multicast join information in the comparison result, where the first IGMP report packet is generated according to the newly added multicast group information;
when the preset format is the V3 format, and when there is the newly added multicast group information in the comparison result, or there is the newly added multicast source information and multicast group information in the comparison result, the generating unit is specifically configured to:
   receive the comparison result sent by the comparing unit, and generate an allow packet according to the newly added multicast join information in the comparison result, where the allow packet is generated according to the newly added multicast group information or according to the newly added multicast source information and multicast group information;
   when the preset format is the V1 format or the V2 format, and when there is the reduced multicast group information in the comparison result, the generating unit is specifically configured to:
      receive the comparison result sent by the comparing unit, and generate a leave indication packet according to the reduced multicast join information in the comparison result, where the leave indication packet is generated according to the reduced multicast group information; and
      when the preset format is the V3 format, and when there is the reduced multicast group information in the comparison result, or there is the reduced multicast source information and multicast group information in the comparison result, the generating unit is specifically configured to:
         receive the comparison result sent by the comparing unit, and generate a leave packet according to the reduced multicast join information in the comparison result, where the leave packet is generated according to the reduced multicast group information or according to the reduced multicast source information and multicast group information.

With reference to the third possible implementation manner of the second aspect, in a fifth possible implementation manner of the second aspect, when the preset format is the V2 format, or when the preset format is the V3 format, the generating unit is specifically configured to:
receive a group-specific query packet sent by the first multicast router, where the group-specific query packet includes a specific VLAN identifier; and
generate a second IGMP report packet according to the comparison result, where the second IGMP report packet is generated according to the updated multicast join information.

With reference to the third possible implementation manner of the second aspect, in a sixth possible implementation manner of the second aspect, when the preset-protocol packet is a PIM packet,
when there is the newly added multicast group information in the comparison result, the generating unit is specifically configured to:
receive the comparison result of the comparing unit, and generate a PIM SM Join according to the newly added multicast join information in the comparison result, where the PIM SM Join is generated according to the newly added multicast group information;
when there is the newly added multicast source information and multicast group information in the comparison result, the generating unit is specifically configured to:
   receive the comparison result of the comparing unit, and generate the PIM SSM Join according to the newly added multicast join information in the comparison result, where the PIM SSM Join is generated according to the newly added multicast source information and multicast group information;
   when there is the reduced multicast group information in the comparison result, the generating unit is specifically configured to:
      receive the comparison result of the comparing unit, and generate the PIM SM Prune according to the reduced multicast join information in the comparison result, where the PIM SM Prune is used to delete the reduced multicast group information; and
      when there is the reduced multicast source information and multicast group information in the comparison result, the generating unit is specifically configured to:
         receive the comparison result of the comparing unit, and generate the PIM SSM Prune according to the reduced multicast join information in the comparison result, where the PIM SSM Prune is used to delete the reduced multicast source information and multicast group information.

The embodiments of the present invention provide a multicast communications method and an aggregation switch. The multicast communications method includes: acquiring, by an AGG, a GM LSP packet sent by an ACC; comparing multicast join information in the GM LSP packet with multicast join information that is stored in the AGG and undated last time, to obtain a comparison result, and updating, according to the comparison result, the multicast join information stored in the AGG; when there is changed multicast join information in the comparison result, generating, according to the comparison result, a preset-protocol packet according to a preset format, where the preset-protocol packet is an Internet Group Management Protocol IGMP packet or a Protocol Independent Multicast PIM packet; and sending the preset-protocol packet to a first multicast router, so that the first multicast router generates a multicast forwarding entry according to the preset-protocol packet. In this way, the acquired GM LSP packet is compared with the GM LSP packet stored in the AGG; and when there is the changed multicast join information in the comparison result, the preset-protocol packet is generated according to the comparison result, and the preset-protocol packet is sent to the first multicast router, where the comparison result includes newly added or reduced multicast group information, or includes newly added or reduced multicast source information and multicast group information. Compared with the prior art, the newly added or reduced multicast group information, or the newly added or reduced multicast source information and multicast group information is actively sent to the first multicast router, which implements on-demand sending on a path from the AGG to the first multicast router, thereby saving link bandwidth from the AGG to the first multicast router.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a flowchart of a multicast communications method according to an embodiment of the present invention;
FIG. 2 is a schematic structural diagram of an interactive television network according to an embodiment of the present invention;
FIG. 3 is a flowchart of another multicast communications method according to an embodiment of the present invention;
FIG. 4 is a schematic structural diagram of an AGG according to an embodiment of the present invention; and
FIG. 5 is a schematic structural diagram of another AGG according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

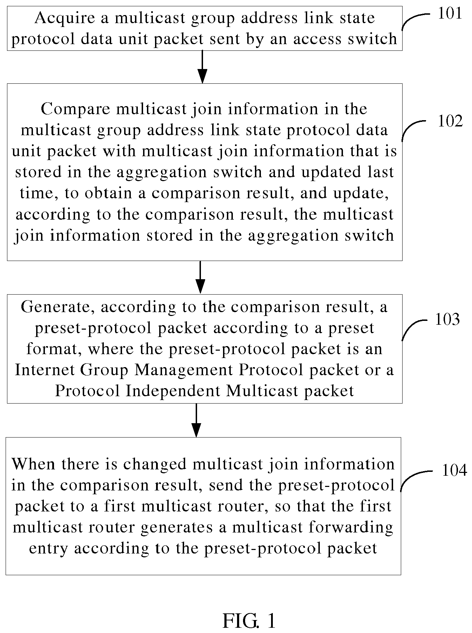

An embodiment of the present invention provides a multicast communications method applied to an AGG. As shown in FIG. 1, the method includes:
101. Acquire a GM LSP packet sent by an ACC.

The GM LSP packet includes a VLAN identifier of 12 bits and multicast group information that is corresponding to the VLAN identifier, or a VLAN identifier and multicast source information and multicast group information that are corresponding to the VLAN identifier, or a fine grained label (Fine Grained Label, FGL) and multicast group information that is corresponding to the fine grained label, or a fine grained label and multicast source information and multicast group information that are corresponding to the fine grained label. It should be noted that the fine grained label is a VLAN identifier of 24 bits, and therefore, the VLAN identifier in the embodiment of the present invention may refer to a VLAN identifier of 12 bits, or may refer to a VLAN identifier of 24 bits.

102. Compare multicast join information in the GM LSP packet with multicast join information that is stored in the AGG and updated last time, to obtain a comparison result, and update, according to the comparison result, the multicast join information stored in the AGG.

103. When there is changed multicast join information in the comparison result, generate, according to the comparison result, a preset-protocol packet according to a preset format, where the preset-protocol packet is an Internet Group Management Protocol IGMP packet or a Protocol Independent Multicast PIM packet.

104. Send the preset-protocol packet to a first multicast router, so that the first multicast router generates a multicast forwarding entry according to the preset-protocol packet.

In this way, the acquired GM LSP packet is compared with the GM LSP packet stored in the AGG; and when there is the changed multicast join information in the comparison result, the preset-protocol packet is generated according to the comparison result, and the preset-protocol packet is sent to the first multicast router, where the comparison result includes newly added or reduced multicast group information, or includes newly added or reduced multicast source information and multicast group information. Compared with the prior art, the newly added or reduced multicast group information, or the newly added or reduced multicast source information and multicast group information is actively sent to the first multicast router, which implements on-demand sending on a path from the AGG to the first multicast router, thereby saving link bandwidth from the AGG to the first multicast router.

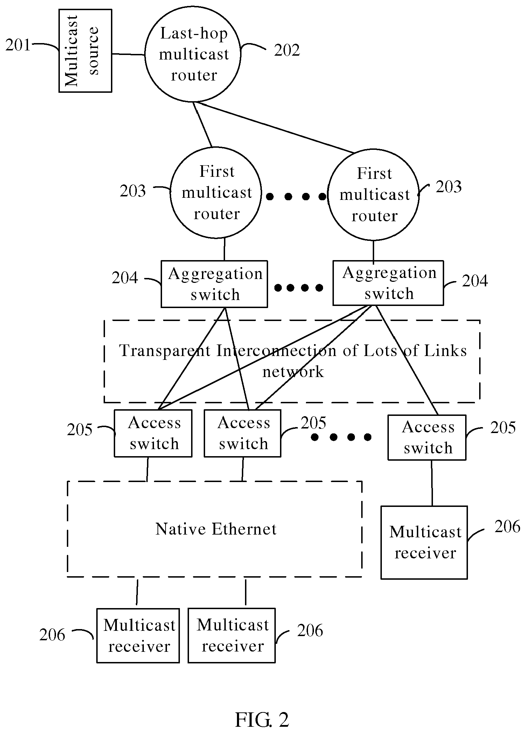

It should be noted that this multicast communications method may be implemented between a TRILL network and a multicast router. The TRILL network not only may be applied to a data center scenario, but also may be applied to an IPTV scenario. FIG. 2 is a schematic structural diagram of an interactive television network IPTV. In the IPTV network, an ACC 205 is configured to directly connect a receiver 206 of multicast source information or multicast group information; and the ACC 205 may be directly connected to the receiver 206 of multicast source information or multicast group information, or may access the receiver 206 of multicast source information or multicast group information through a Native ETH (Native Ethernet, native Ethernet). An AGG 204 is an aggregation point of multiple ACCs 205, and the TRILL network is between the ACC 205 and the AGG 204. The AGG 204 accesses a on-demand request of a multicast receiver 206 by using the ACC 205, and sends, by using a first multicast router 203 and a last-hop multicast router 202, to a multicast source 201 a packet carrying multicast group information, or multicast source information and multicast group information in the on-demand request, for ordering a program.

The AGG, the ACC, and a forwarding device between the AGG and the ACC form the TRILL network; and the TRILL protocol runs between the AGG and the ACC. The TRILL protocol is a routing protocol based on link state calculation over the TRILL network, a device running the TRILL protocol is called an RB (Route Bridge, routing bridge device), and the AGG and the ACC belong to RB devices of a TRILL network edge. The RB learns information about a TRILL network topology and distribution tree by using information in the TRILL protocol. Each RB uses the device itself as a source node, and generates, by using a shortest path tree algorithm, a unicast forwarding table to another RB; and the RB uses a root of each distribution tree as a source node, and generates, by using the shortest path tree algorithm, a distribution tree forwarding table to another RB.

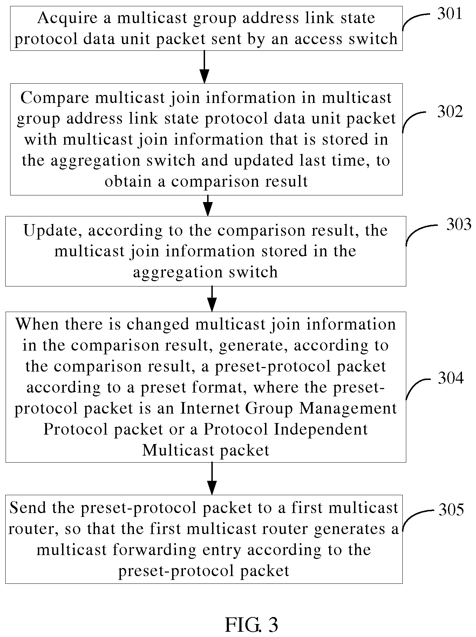

The multicast communications method provided by the embodiment of the present invention may further be applied to multicast communications in an IPTV scenario, and is executed by an AGG. A specific process of executing the multicast communications method is shown in FIG. 3, and includes:
301. Acquire a GM LSP packet sent by an ACC.

First, the ACC acquires a GM LSP packet sent by a multicast group receiver; then, the ACC sends the GM LSP packet to an AGG according to a flooding algorithm; and finally, the AGG acquires the GM LSP packet sent by the access switch ACC.

Specifically, a method for acquiring, by the ACC, the GM LSP packet sent by the multicast group receiver is as follows:

An RB of a TRILL network edge enables an IGMP SNOOPING (Internet Group Management Protocol Snooping, Internet Group Management Protocol snooping) function, and periodically sends a query packet to the multicast group receiver, to trigger the multicast group receiver to send an IGMP Report (Internet Group Management Protocol Report, Internet Group Management Protocol report) packet.

When receiving port information of the IGMP Report packet by using the snooping function, the ACC needs to establish a multicast forwarding entry according to the port information of the packet, and implements on-demand replication of multicast traffic on a port side of a multicast group receiver. When receiving the IGMP Report packet, the ACC needs to notify the TRILL network of multicast group information in the IGMP Report packet, or multicast source information and multicast group information in the IGMP Report packet, performs pruning calculation according to the multicast group information, or the multicast source information and multicast group information, to implement on-demand replication of multicast traffic in the TRILL network.

302. Compare multicast join information in the GM LSP packet with multicast join information that is stored in the AGG and updated last time, to obtain a comparison result.

For example, step 302 may be implemented according to the following two methods:
A first method is as follows: when the multicast join information in the GM LSP packet includes a VLAN identifier and multicast group information corresponding to the VLAN identifier, classifying and combining, according to the VLAN identifier, the multicast join information that is stored in the AGG and updated last time, to obtain first multicast join information, where the first multicast join information is each VLAN identifier and multicast group information corresponding to each VLAN identifier that are stored in the AGG; classifying and combining, according to the VLAN identifier, the multicast join information in the GM LSP packet, to obtain second multicast join information, where the second multicast join information is each VLAN identifier and multicast group information corresponding to each VLAN identifier that are in the GM LSP packet; and comparing the first multicast join information with the second multicast join information to obtain the comparison result, where the comparison result includes: when the first multicast join information is compared with the second multicast join information, and there is newly added multicast group information in a specific VLAN of the second multicast join information, the comparison result includes the newly added multicast group information.

### Embodiment 1

For example, in the embodiment of the present invention, it is assumed that the multicast join information that is stored in the AGG and updated last time is a GM LSP packet 1 (VLAN1, Group 1, Group2) advertised by an ACC1 and a GM LSP packet 2 (VLAN1, Group1, Group3) advertised by an ACC2, and the multicast join information in the GM LSP packet received by the AGG is a GM LSP packet 3 (VLAN1, Group2, Group4) advertised by an ACC3; and it should be noted that the multicast join information in the GM LSP packet received by the AGG may be one piece or may be multiple pieces. Multicast join information of the GM LSP packet 1, the GM LSP packet 2, and the GM LSP packet 3 includes a VLAN identifier and multicast group information corresponding to the VLAN identifier. First, the multicast join information that is stored in the AGG and updated last time is classified and combined according the VLAN identifier, that is, the multicast join information in the GM LSP packet 1 and the GM LSP packet 2 is classified and combined according the VLAN identifier; because VLAN identifiers in the GM LSP packet 1 and the GM LSP packet 2 are both VLAN1, the first multicast join information obtained after classification and combination is VLAN1 and multicast group information Group1, Group2, and Group3 corresponding to VLAN1 that are stored in the AGG. Then, the multicast join information in the received GM LSP packet 3 is classified and combined according to the VLAN identifier, to obtain the second multicast join information; because the VLAN identifier of the GM LSP packet 3 is also VLAN1, the second multicast join information, obtained after classification and combination, in the GM LSP packet 3 is VLAN1 and multicast group information Group2 and Group4 corresponding to VLAN1. Then, the first multicast join information is compared with the second multicast join information, and obviously, it may be obtained, by comparing, that there is newly added multicast group information Group4 in VLAN1 of the second multicast join information.

When the first multicast join information is compared with the second multicast join information, and there is reduced multicast group information in a specific VLAN of the second multicast join information, the comparison result includes the reduced multicast group information.

### Embodiment 2

For example, in the embodiment of the present invention, it is assumed that the multicast join information that is stored in the AGG and updated last time is a GM LSP packet 4 (VLAN1, Group 1, Group2) advertised by an ACC1 and a GM LSP packet 5 (VLAN1, Group1, Group3) advertised by an ACC2, and the multicast join information in the GM LSP packet received by the AGG is a GM LSP packet 6 (VLAN1, Group1) advertised by the ACC2; and it should be noted that multicast join information of the GM LSP packet 4, the GM LSP packet 5, and the GM LSP packet 6 includes a VLAN identifier and multicast group information corresponding to the VLAN identifier. First, the multicast join information that is stored in the AGG and updated last time is classified and combined according the VLAN identifier, that is, the multicast join information in the GM LSP packet 4 and the GM LSP packet 5 is classified and combined according the VLAN identifier; because VLAN identifiers in the GM LSP packet 4 and the GM LSP packet 5 are both VLAN1, the first multicast join information obtained after classification and combination is VLAN1 and multicast group information Group1, Group2, and Group3 corresponding to VLAN1 that are stored in the AGG. Then, the multicast join information in the received GM LSP packet 6 is classified and combined according to the VLAN identifier, to obtain the second multicast join information; because the VLAN identifier of the GM LSP packet 6 is also VLAN1, the second multicast join information, obtained after classification and combination, in the GM LSP packet 6 is VLAN1 and multicast group information Group 1 corresponding to VLAN1. Then, the first multicast join information is compared with the second multicast join information, and obviously, it may be obtained, by comparing, that there is reduced multicast group information Group2 and Group3 in VLAN1 of the second multicast join information.

A second method is as follows: when the multicast join information in the GM LSP packet includes a VLAN identifier and multicast source information and multicast group information that are corresponding to the VLAN identifier, classifying and combining, according to the VLAN identifier, the multicast join information that is stored in the AGG and updated last time, to obtain first multicast join information, where the first multicast join information is each VLAN identifier and multicast source information and multicast group information corresponding to each VLAN identifier that are stored in the AGG; classifying and combining, according to the VLAN identifier, the multicast join information in the GM LSP packet, to obtain second multicast join information, where the second multicast join information is each VLAN identifier and multicast source information and multicast group information corresponding to each VLAN identifier that are stored in the GM LSP packet; and comparing the first multicast join information with the second multicast join information to obtain the comparison result, where the comparison result includes: when the first multicast join information is compared with the second multicast join information, and there is newly added multicast source information and multicast group information in a specific VLAN of the second multicast join information, the comparison result includes the newly added multicast source information and multicast group information.

### Embodiment 3

For example, in the embodiment of the present invention, it is assumed that the multicast join information that is stored in the AGG and updated last time is a GM LSP packet 7 (VLAN1, S1, Group 1) advertised by an ACC1, and multicast join information in a GM LSP packet 8 received by the AGG is the GM LSP packet 8 (VLAN1, S2, Group1) advertised by an ACC2 and a GM LSP packet 9 (VLAN1, S1, Group1) advertised by an ACC3; and it should be noted that multicast join information of the GM LSP packet 7, the GM LSP packet 8, and the GM LSP packet 9 includes a VLAN identifier and multicast source information and multicast group information corresponding to the VLAN identifier. First, the multicast join information that is stored in the AGG and updated last time is classified and combined according the VLAN identifier; because the VLAN identifier in the GM LSP packet 7 is VLAN1, the first multicast join information obtained after classification and combination is VLAN1 and multicast source information and multicast group information (S1, Group1) corresponding to VLAN1 that are stored in the AGG. Then, the multicast join information in the received GM LSP packet 8 and GM LSP packet 9 is classified and combined according to the VLAN identifier, to obtain the second multicast join information; because VLAN identifiers of the GM LSP packet 8 and the GM LSP packet 9 are both VLAN1, the second multicast join information, obtained after classification and combination, is VLAN1 and multicast source information and multicast group information (S2, Group 1) and (S1, Group1) corresponding to VLAN1. Then, the first multicast join information is compared with the second multicast join information, and obviously, it may be obtained, by comparing, that there is newly added multicast source information and multicast group information (S2, Group1) in VLAN1 of the second multicast join information.

When the first multicast join information is compared with the second multicast join information, and there is reduced multicast source information and multicast group information in a specific VLAN of the second multicast join information, the comparison result includes the reduced multicast source information and multicast group information.

### Embodiment 4

For example, in the embodiment of the present invention, it is assumed that the multicast join information that is stored in the AGG and updated last time is a GM LSP packet 10 (VLAN1, S1, Group1) advertised by an ACC1 and a GM LSP packet 11 (VLAN1, S2, Group1) advertised by an ACC2, and multicast join information in a GM LSP packet 12 that is received by the AGG and advertised by an ACC3 is (VLAN1, S2, Group1); and it should be noted multicast join information of the GM LSP packet 10 and the GM LSP packet 11 includes a VLAN identifier and multicast source information and multicast group information corresponding to the VLAN identifier. First, the multicast join information that is stored in the AGG and updated last time is classified and combined according the VLAN identifier; because VLAN identifiers in the GM LSP packet 10 and the GM LSP packet 11 are VLAN1, the first multicast join information obtained after classification and combination is VLAN1 and multicast source information and multicast group information (S1, Group1) and (S2, Group2) corresponding to VLAN1 that are stored in the AGG. Then, the multicast join information in the received GM LSP packet 12 is classified and combined according to the VLAN identifier, to obtain the second multicast join information; because the VLAN identifier of the GM LSP packet 12 is VLAN1, the second multicast join information, obtained after classification and combination, in the GM LSP packet 12 is VLAN1 and multicast source information and multicast group information (S2, Group 1) corresponding to VLAN1. Then, the first multicast join information is compared with the second multicast join information, and obviously, it may be obtained, by comparing, that there is reduced multicast source information and multicast group information (S1, Group 1) in VLAN1 of the second multicast join information.

It should be noted that the multicast join information in the GM LSP packet received by the AGG may be one piece or may be multiple pieces; therefore, the multicast join information in the GM LSP packet is compared with the multicast join information that is stored in the AGG and updated last time, and there may be newly added multicast join information and reduced multicast join information in the obtained comparison result at the same time. For example, it is assumed that the multicast join information that is stored in the AGG and updated last time is a GM LSP packet 13 (VLAN1, Group 1, Group2) advertised by the ACC1 and a GM LSP packet 14 (VLAN2, Group3, Group4) advertised by the ACC2, a GM LSP packet 15 that is received by the AGG and advertised by the ACC3 is (VLAN1, Group2, Group5), and a GM LSP packet 16 that is received by the AGG and advertised by the ACC2 is (VLAN2, Group4); the multicast join information that is stored in the AGG and updated last time is classified and combined according to the VLAN identifier, and the obtained first multicast join information is (VLAN1, Group 1, Group2) and (VLAN2, Group3, Group4); the multicast join information in the GM LSP packet received by the AGG is classified and combined according to the VLAN identifier, and the obtained second multicast join information is (VLAN1, Group2, Group5) and (VLAN2, Group4); and then the first multicast join information is compared with the second multicast join information, and obviously, the comparison result may be obtained, by comparing, that there is newly added multicast group information Group5 and reduced multicast group information Group 1 in VLAN1 of the second multicast join information, and there is reduced multicast group information Group3 in VLAN2. Then, step 303 is executed, a preset-protocol packet is generated according to the comparison result and according to a preset format.

303. Update, according to the comparison result, the multicast join information stored in the AGG.

Step 303 specifically includes the following: the AGG updates, by using the comparison result obtained in step 302, the multicast join information that is stored in the AGG and updated last time, adds the newly added multicast group information, or multicast source information and multicast group information into the multicast join information that is stored in the AGG and updated last time, and deletes the reduced multicast group information, or multicast source information and multicast group information from the multicast join information that is stored in the AGG and updated last time, to obtain latest multicast join information stored in the AGG.

For example, the multicast join information stored in the AGG may be updated according to Embodiment 2, to obtain new multicast join information (VLAN1, Group1) stored in the AGG; and the multicast join information stored in the AGG may be updated according to Embodiment 4, to obtain new multicast join information (VLAN1, S2, Group1) stored in the AGG.

304. When there is changed multicast join information in the comparison result, generate, according to the comparison result, a preset-protocol packet according to a preset format, where the preset-protocol packet is an IGMP packet or a PIM packet.

When the IGMP protocol runs between the AGG and a first multicast router, step 304 specifically includes the following: the AGG generates, according to the comparison result, an IGMP packet according to the preset format, where the preset format includes: a V1 format, a V2 format, or a V3 format, where V1, V2, and V3 are version numbers of the IGMP protocol.

When the preset format is the V1 format or the V2 format, and when there is the newly added multicast group information in the comparison result, the generating, according to the comparison result, an IGMP packet according to the preset format includes the following: the AGG generates a first IGMP report packet according to the newly added multicast join information in the comparison result, where the first IGMP report packet is generated according to the newly added multicast group information.

For example, for the newly added multicast group information Group4 of VLAN1 in Embodiment 1 of the present invention, when the version number of the IGMP protocol is V1 or V2, the AGG generates, according to the comparison result, the first IGMP report packet according to the preset format, which is the V1 format or the V2 format, where the first IGMP report packet may be an IGMP Report packet, and the first IGMP report packet includes the newly added multicast group information, that is, the newly added multicast group information Group4 in VLAN1.

When the preset format is the V3 format, and when there is the newly added multicast group information in the comparison result, or there is the newly added multicast source information and multicast group information in the comparison result, the generating, according to the comparison result, an IGMP packet according to the preset format includes the following: the AGG generates an allow packet according to the newly added multicast join information in the comparison result, where the allow packet is generated according to the newly added multicast group information or according to the newly added multicast source information and multicast group information.

For example, for the newly added multicast group information Group4 of VLAN1 in Embodiment 1, when the version number of the IGMP protocol is V3, the AGG generates an allow packet according to the newly added multicast join information in the comparison result, for example, the allow packet may be TO_IN(NULL, Group4), and the allow packet indicates that the multicast group information Group4 is added in VLAN1. For the newly added multicast source information and multicast group information (S2, Group1) in VLAN1 in Embodiment 3, the AGG generates an allow packet according to the newly added multicast join information in the comparison result, for example, the allow packet may be ALLOW(S2, Group 1), and the allow packet indicates that the multicast source information and multicast group information (S2, Group 1) are added in VLAN1.

When the preset format is the V3 format, and when there is the reduced multicast group information in the comparison result, or there is the reduced multicast source information and multicast group information in the comparison result, the generating, according to the comparison result, an IGMP packet according to the preset format includes the following: the AGG generates a leave packet according to the reduced multicast join information in the comparison result, where the leave packet is generated according to the reduced multicast group information or according to the reduced multicast source information and multicast group information.

For example, for the reduced multicast group information Group2 and Group3 in VLAN1 in Embodiment 2, when the version number of the IGMP protocol is V3, the AGG generates a leave packet according to the reduced multicast join information in the comparison result, for example, the leave packet may be TO_EX(NULL, Group2) and TO_EX(NULL, Group3), and the leave packet indicates that the multicast group information Group2 and Group3 is reduced in VLAN1. For the reduced multicast source information and multicast group information (S1, Group 1) in VLAN1 in Embodiment 4, the AGG generates a leave packet according to the reduced multicast join information in the comparison result, for example, the leave packet may be BLOCK(S1, Group1), and the leave packet indicates that the multicast source information and multicast group information (S1, Group 1) are reduced in VLAN1.

When the preset format is the V1 format or the V2 format, and when there is the reduced multicast group information in the comparison result, the generating, according to the comparison result, an IGMP packet according to the preset format includes the following: the AGG generates a leave indication packet according to the reduced multicast join information in the comparison result, where the leave indication packet is generated according to the reduced multicast group information. It should be noted that this method is appropriate for a case in which the preset format is the V2 format and the first multicast router has an IGMP fast-leave function.

For example, for the reduced multicast group information Group2 and Group3 in VLAN1 in Embodiment 2 of the present invention, when the version number of the IGMP protocol is V1, or when the version number of the IGMP protocol is V2 and the first multicast router has the IGMP fast-leave (IGMP Fast Leave, IGMP fast-leave) function, the AGG generates a leave indication packet according to the reduced multicast join information in the comparison result, where the leave indication packet may be an IGMP leave packet, and the leave indication packet is generated according to the reduced multicast group information Group2 and Group3 in VLAN1.

Optionally, when the preset format is the V2 format, or when the preset format is the V3 format, the generating, according to the comparison result, an IGMP packet according to the preset format further includes the following: the AGG receives a group-specific query packet sent by the first multicast router, where the group-specific query packet includes a specific VLAN identifier; and the AGG generates a second IGMP report packet according to the comparison result, where the second IGMP report packet is generated according to the updated multicast join information that is stored in the AGG and updated last time.

For example, for the reduced multicast group information Group2 and Group3 in VLAN1 in Embodiment 2 of the present invention, when the version number of the IGMP protocol is V2, the AGG receives the group-specific query packet sent by the first multicast router, where the group-specific query packet includes a specific VLAN identifier, namely, VLAN1. After receiving the group-specific query packet, the AGG sends to the first multicast router the multicast group information that is corresponding to VLAN1, stored in the AGG, and obtained by updating in step 303, which is (VLAN1, Group 1). For the reduced multicast source information and multicast group information (VLAN1, S1, Group1) in VLAN1 in Embodiment 4 of the present invention, when the version number of the IGMP protocol is V3, the AGG receives the group-specific query packet sent by the first multicast router, where the group-specific query packet includes a specific VLAN identifier, namely, VLAN1. After receiving the group-specific query packet, the AGG sends to the first multicast router the multicast source information and multicast group information that are corresponding to VLAN1, stored in the AGG, and obtained by updating in step 303, which are (VLAN1, S2, Group 1).

Optionally, when the version number of the IGMP protocol is V1, for the reduced multicast group information Group2 and Group3 in VLAN1 in Embodiment 2, the AGG may also not perform any actions. Because a timer is disposed in the first multicast router, when the first multicast router does not receive the multicast group information Group2 or Group3 corresponding to VLAN1 within time specified by the timer, it is considered that a receiver of the multicast group information Group2 and Group3 corresponding to VLAN1 gives up receiving of the multicast group information Group 2 and Group3; and then, the AGG removes the multicast group information Group2 and Group3 corresponding to VLAN1 from an outbound port of a corresponding multicast forwarding entry.

Further, when the PIM protocol runs between the AGG and the first multicast router, step 304 specifically includes the following: when there is the newly added multicast group information in the comparison result, the generating, according to the comparison result, a preset-protocol packet according to a preset format includes the following: the AGG generates a PIM SM Join according to the newly added multicast join information in the comparison result, where the PIM SM Join is generated according to the newly added multicast group information.

For example, for the newly added multicast group information Group4 in VLAN1 in Embodiment 1 of the present invention, the AGG generates the PIM SM Join. The PIM SM Join is generated according to the newly added multicast group information, namely, the multicast group information Group4 in VLAN1.

When there is the newly added multicast source information and multicast group information in the comparison result, the generating, according to the comparison result, a preset-protocol packet according to a preset format includes the following: the AGG generates the PIM SSM Join according to the newly added multicast join information in the comparison result, where the PIM SSM Join is generated according to the newly added multicast source information and multicast group information.

For example, for the newly added multicast source information and multicast group information (S2, Group1) in VLAN1 in Embodiment 3 of the present invention, the AGG generates the PIM SSM Join, where the PIM SSM Join is generated according to the newly added multicast source information and multicast group information (S2, Group 1) in VLAN1.

When there is the reduced multicast group information in the comparison result, the generating, according to the comparison result, a preset-protocol packet according to a preset format includes the following: the AGG generates a PIM SM Prune according to the reduced multicast join information in the comparison result, where the PIM SM Prune is used to delete the reduced multicast group information.

For example, for the reduced multicast group information Group2 and Group3 in VLAN1 in Embodiment 2 of the present invention, the AGG generates the PIM SM Prune. The PIM SM Prune is generated according to the reduced multicast group information in VLAN1, namely, the reduced multicast group information Group2 and Group3 in VLAN1.

When there is the reduced multicast source information and multicast group information in the comparison result, the generating, according to the comparison result, a preset-protocol packet according to a preset format includes the following: the AGG generates the PIM SSM Prune according to the reduced multicast join information in the comparison result, where the PIM SSM Prune is used to delete the reduced multicast source information and multicast group information.

For the reduced multicast source information and multicast group information (S1, Group1) in VLAN1 in Embodiment 4, the AGG generates the PIM SSM Prune according to the reduced multicast join information in the comparison result, where the PIM SSM Prune is generated according to the reduced multicast source information and multicast group information (S1, Group 1) in VLAN1.

305. Send the preset-protocol packet to a first multicast router, so that the first multicast router generates a multicast forwarding entry according to the preset-protocol packet.

When there is changed multicast join information in the specific VLAN identifier, the AGG sends, in a VLAN indicated by the specific VLAN identifier, the preset-protocol packet to the first multicast router, and updates the multicast forwarding entry by using the preset-protocol packet, where the multicast forwarding entry includes a multicast group address and an outbound port, and is used to perform multicast replication.

For example, for the reduced multicast source information and multicast group information (S1, Group1) in VLAN1 in Embodiment 4, the AGG generates the PIM SSM Prune according to the reduced multicast source information and multicast group information (S1, Group1) in VLAN1, and sends, in a channel of VLAN1, the PIM SSM Prune to the first multicast router; and then the first multicast router updates the multicast forwarding entry by using the PIM SSM Prune, and removes an outbound port of the reduced multicast source information and multicast group information (S1, Group1) from the multicast forwarding entry.

The embodiment of the present invention provides a multicast communications method, where: the acquired GM LSP packet is compared with the GM LSP packet stored in the AGG; and when there is changed multicast join information in the comparison result, a preset-protocol packet is generated according to the comparison result, and the preset-protocol packet is sent to the first multicast router, where the comparison result includes newly added or reduced multicast group information, or includes newly added or reduced multicast source information and multicast group information. Compared with the prior art, the newly added or reduced multicast group information, or the newly added or reduced multicast source information and multicast group information is actively sent to the first multicast router, which implements on-demand sending on a path from the AGG to the first multicast router, thereby saving link bandwidth from the AGG to the first multicast router.

It should be noted that, in the multicast communications in the IPTV scenario, the method further includes: receiving, by a first multicast router, a preset-protocol packet sent by the AGG, where the first multicast router is a router connected to the AGG, the preset-protocol packet is an IGMP packet or a PIM packet, and the preset-protocol packet is generated by the AGG according to packet content of the GM LSP packet; and the first multicast router sends the preset-protocol packet to a last-hop multicast router. It should be noted that, the first multicast router forwards the preset-protocol packet to the last-hop multicast router according to a multicast forwarding entry. A specific forwarding process is the same as that in the prior art, which is not further described herein in the present invention.

When the packet is sent to the last-hop multicast router, the last-hop multicast router performs election. Specifically, when the IGMP protocol runs between the AGG and the last-hop multicast router, after receiving the IGMP Report sent by the first multicast router, the last-hop multicast router starts to perform IGMP router election; for example, assuming that the last-hop multicast router includes a router 1 and a router 2, and after election, the router 2 is a non-querier and the router 1 is a querier, in the following, only the router 1 needs to send the IGMP Report to the AGG, and only the router 1 is responsible for sending a data stream of a multicast source to a multicast receiver. When the PIM protocol runs between the AGG and the last-hop multicast router, after the last-hop multicast router receives the PIM SM Join or PIM SSM Join message sent by the first multicast router, a PIM hello packet is mutually sent between last-hop multicast routers, to elect a DR (Designated Router, designated router) and a BDR (Backup Designated Router, backup designated router). For example, assuming that the last-hop multicast router includes a router 1 and a router 2, and after election, the router 2 is a BDR and the router 1 is a DR, in the following, only the router 1 needs to be responsible for sending a data stream of a multicast source to a multicast receiver. It should be noted that a method of router election is the same as that in the prior art, which is not further described herein in the present invention.

In particular, after receiving a data stream of a multicast source sent by the multicast source, the querier router 1 or DR router 1 queries the multicast forwarding entry, and if an outbound interface of the multicast forwarding entry includes an outbound port connected to the TRILL network, the data stream of the multicast source is replicated and forwarded; after receiving the data stream of the multicast source from the first multicast router, the AGG forwards, by using a distribution tree entry pruned by the TRILL network, the data stream of the multicast source to the TRILL network; after receiving a data stream of a multicast source sent by a TRILL network side, the ACC device first decapsulates the data stream of the multicast source to recover the data stream to a data stream of a multicast source of a Native ETH (Native EtherNet, native Ethernet), then queries a local IGMP Snooping multicast forwarding table, and replicates and forwards the data stream of the multicast source according to the IGMP Snooping multicast forwarding table until the data stream of the multicast source is forwarded to a receiver of the multicast group information.

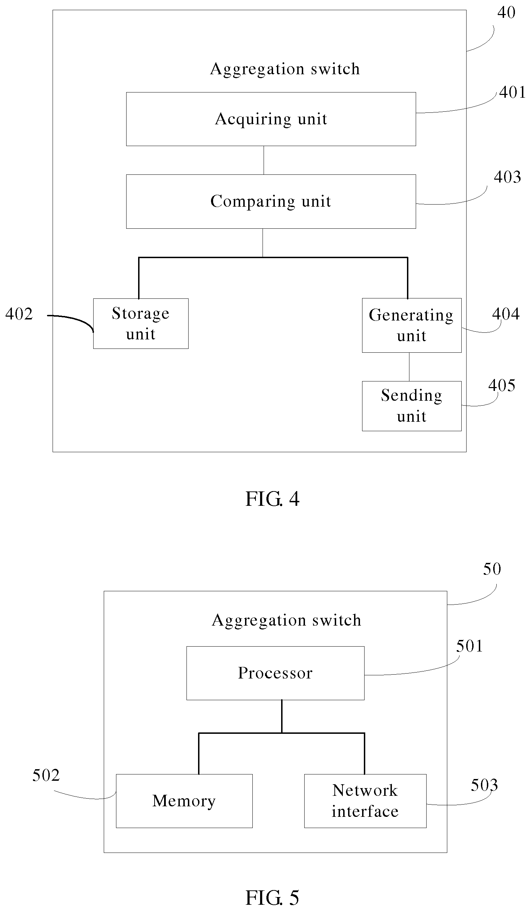

An embodiment of the present invention provides an AGG 40. As shown in FIG. 4, the AGG 40 includes:
an acquiring unit 401, configured to acquire a GM LSP packet sent by an ACC;
a storage unit 402, configured to store multicast join information that is updated last time;
a comparing unit 403, configured to: compare multicast join information in the GM LSP packet acquired by the acquiring unit with the multicast join information in the storage unit, to obtain a comparison result, send the comparison result to a generating unit, and update the multicast join information in the storage unit according to the comparison result;
a generating unit 404, configured to: receive the comparison result sent by the comparing unit, and when there is changed multicast join information in the comparison result, generate, according to the comparison result, a preset-protocol packet according to a preset format, where the preset-protocol packet is an IGMP packet or a PIM packet; and
a sending unit 405, configured to send the preset-protocol packet generated by the generating unit to a first multicast router, so that the first multicast router generates a multicast forwarding entry according to the preset-protocol packet.

In this way, the acquiring unit acquires the GM LSP packet; the comparing unit compares the GM LSP packet with the GM LSP packet stored in the storage unit; the generating unit generates, according to the comparison result, the preset-protocol packet by using a packet that needs to be sent; and the sending unit sends the preset-protocol packet to the first multicast router, where the comparison result includes newly added or reduced multicast group information, or includes newly added or reduced multicast source information and multicast group information. Compared with the prior art, the newly added or reduced multicast group information, or the newly added or reduced multicast source information and multicast group information is actively sent to the first multicast router, which implements on-demand sending on a path from the AGG to the first multicast router, thereby saving link bandwidth from the AGG to the first multicast router.

The GM LSP packet is a TRILL LSP packet; and the multicast join information in the GM LSP packet includes: a VLAN identifier and multicast group information corresponding to the VLAN identifier, or the multicast join information in the GM LSP packet includes: a VLAN identifier and multicast source information and multicast group information that are corresponding to the VLAN identifier.

Optionally, the comparing unit 403 is specifically configured to:
when the multicast join information in the GM LSP packet includes a VLAN identifier and multicast group information corresponding to the VLAN identifier, classify and combine, according to the VLAN identifier, the multicast join information stored in the storage unit 402, to obtain first multicast join information, where the first multicast join information is each VLAN identifier and multicast group information corresponding to each VLAN identifier that are stored in the AGG; classify and combine, according to the VLAN identifier, the multicast join information in the GM LSP packet acquired by the acquiring unit 401, to obtain second multicast join information, where the second multicast join information is each VLAN identifier and multicast group information corresponding to each VLAN identifier that are in the GM LSP packet; and compare the first multicast join information with the second multicast join information to obtain the comparison result, where the comparison result includes: when the first multicast join information is compared with the second multicast join information, and there is newly added multicast group information in a specific VLAN of the second multicast join information, the comparison result includes the newly added multicast group information; and when the first multicast join information is compared with the second multicast join information, and there is reduced multicast group information in a specific VLAN of the second multicast join information, the comparison result includes the reduced multicast group information; or
when the multicast join information in the GM LSP packet includes a VLAN identifier and multicast source information and multicast group information that are corresponding to the VLAN identifier, classify and combine, according to the VLAN identifier, the multicast join information stored in the storage unit 402, to obtain first multicast join information, where the first multicast join information is each VLAN identifier and multicast source information and multicast group information corresponding to each VLAN identifier that are stored in the AGG; classify and combine, according to the VLAN identifier, the multicast join information in the GM LSP packet acquired by the acquiring unit 401, to obtain second multicast join information, where the second multicast join information is each VLAN identifier and multicast source information and multicast group information corresponding to each VLAN identifier that are stored in the GM LSP packet; and compare the first multicast join information with the second multicast join information to obtain the comparison result, where the comparison result includes: when the first multicast join information is compared with the second multicast join information, and there is newly added multicast source information and multicast group information in a specific VLAN of the second multicast join information, the comparison result includes the newly added multicast source information and multicast group information; and when the first multicast join information is compared with the second multicast join information, and there is reduced multicast source information and multicast group information in a specific VLAN of the second multicast join information, the comparison result includes the reduced multicast source information and multicast group information.

Optionally, when the preset-protocol packet is an IGMP packet, the generating unit 404 is specifically configured to:
receive the comparison result sent by the comparing unit 403, and generate, according to the comparison result, an IGMP packet according to the preset format, where the preset format includes: a V1 format, a V2 format, or a V3 format, where V1, V2, and V3 are version numbers of the IGMP protocol.

Optionally, when the preset format is the V1 format or the V2 format, and there is the newly added multicast group information in the comparison result, the generating unit 404 is specifically configured to:
receive the comparison result sent by the comparing unit 403, and generate a first IGMP report packet according to the newly added multicast join information in the comparison result, where the first IGMP report packet is generated according to the newly added multicast group information.

When the preset format is the V3 format, and when there is the newly added multicast group information in the comparison result, or there is the newly added multicast source information and multicast group information in the comparison result, the generating unit 404 is specifically configured to:
receive the comparison result sent by the comparing unit 403, and generate an allow packet according to the newly added multicast join information in the comparison result, where the allow packet is generated according to the newly added multicast group information or according to the newly added multicast source information and multicast group information.

Optionally, when the preset format is the V1 format or the V2 format, and when there is the reduced multicast group information in the comparison result, the generating unit 404 is specifically configured to:
receive the comparison result sent by the comparing unit 403, and generate a leave indication packet according to the reduced multicast join information in the comparison result, where the leave indication packet is generated according to the reduced multicast group information.

When the preset format is the V3 format, and when there is the reduced multicast group information in the comparison result, or there is the reduced multicast source information and multicast group information in the comparison result, the generating unit 404 is specifically configured to:
receive the comparison result sent by the comparing unit 403, and generate a leave packet according to the reduced multicast join information in the comparison result, where the leave packet is generated according to the reduced multicast group information or according to the reduced multicast source information and multicast group information.

When the preset format is the V2 format, or when the preset format is the V3 format, the generating unit 404 is specifically configured to:
receive a group-specific query packet sent by the first multicast router, where the group-specific query packet includes a specific VLAN identifier; and generate a second IGMP report packet according to the comparison result, where the second IGMP report packet is generated according to the updated multicast join information.

When the preset-protocol packet is a PIM packet,
when there is the newly added multicast group information in the comparison result, the generating unit 404 is specifically configured to:
receive the comparison result of the comparing unit 403, and generate a PIM SM Join according to the newly added multicast join information in the comparison result, where the PIM SM Join is generated according to the newly added multicast group information; and
when there is the newly added multicast source information and multicast group information in the comparison result, the generating unit 404 is specifically configured to:
   receive the comparison result of the comparing unit 403, and generate a PIM SSM Join according to the newly added multicast join information in the comparison result, where the PIM SSM Join is generated according to the newly added multicast source information and multicast group information.

When there is the reduced multicast group information in the comparison result, the generating unit 404 is specifically configured to:
receive the comparison result of the comparing unit, and generate a PIM SM Prune according to the reduced multicast join information in the comparison result, where the PIM SM Prune is used to delete the reduced multicast group information.

When there is the reduced multicast source information and multicast group information in the comparison result, the generating unit 404 is specifically configured to:
receive the comparison result of the comparing unit, and generate the PIM SSM Prune according to the reduced multicast join information in the comparison result, where the PIM SSM Prune message is used to delete the reduced multicast source information and multicast group information.

The embodiment of the present invention provides an AGG, where the acquiring unit acquires the GM LSP packet; the comparing unit compares the GM LSP packet with the GM LSP packet stored in the storage unit; the generating unit generates, according to the comparison result, the preset-protocol packet by using a packet that needs to be sent; and the sending unit sends the preset-protocol packet to the first multicast router, where the comparison result includes newly added or reduced multicast group information, or includes newly added or reduced multicast source information and multicast group information. Compared with the prior art, the newly added or reduced multicast group information, or the newly added or reduced multicast source information and multicast group information is actively sent to the first multicast router, which implements on-demand sending on a path from the AGG to the first multicast router, thereby saving link bandwidth from the AGG to the first multicast router.

An embodiment of the present invention provides a communications system, including an ACC and any AGG provided in the embodiments of the present invention.

An embodiment of the present invention provides another AGG. As shown in FIG. 5, the AGG includes:
a processor 501, a memory 502, and a network interface 503, where the network interface 501 is configured to acquire a GM LSP packet sent by an ACC; the memory 502 is configured to: store multicast join information that is updated last time, and store an instruction; the processor 501 is configured to execute the instruction and is configured to: compare multicast join information in the GM LSP packet with the multicast join information in the memory, to obtain a comparison result, and update the multicast join information in the memory according to the comparison result; the processor 501 is further configured to execute the instruction and is configured to: when there is changed multicast join information in the comparison result, generate, according to the comparison result, a preset-protocol packet according to a preset format, where the preset-protocol packet is an IGMP packet or a PIM packet; and the network interface 503 is further configured to send the generated preset-protocol packet to a first multicast router, so that the first multicast router generates a multicast forwarding entry according to the preset-protocol packet.

In this way, the processor acquires the GM LSP packet, compares the GM LSP packet with the GM LSP packet stored in the memory, and generates, according to the comparison result, the preset-protocol packet by using a packet that needs to be sent; then the network interface sends the preset-protocol packet to the first multicast router, where the comparison result includes newly added or reduced multicast group information, or includes newly added or reduced multicast source information and multicast group information. Compared with the prior art, the newly added or reduced multicast group information, or the newly added or reduced multicast source information and multicast group information is actively sent to the first multicast router, which implements on-demand sending on a path from the AGG to the first multicast router, thereby saving link bandwidth from the AGG to the first multicast router.

The GM LSP packet is a TRILL LSP packet; and the multicast join information in the GM LSP packet includes: a VLAN identifier and multicast group information corresponding to the VLAN identifier, or the multicast join information in the GM LSP packet includes: a VLAN identifier and multicast source information and multicast group information that are corresponding to the VLAN identifier.

Optionally, that the processor 501 executes the instruction and is configured to compare multicast join information in the GM LSP packet with multicast join information that is stored in the AGG and updated last time, to obtain a comparison result includes:
when the multicast join information in the GM LSP packet includes a VLAN identifier and multicast group information corresponding to the VLAN identifier, classifying and combining, according to the VLAN identifier, the multicast join information stored in the memory 502, to obtain first multicast join information, where the first multicast join information is each VLAN identifier and multicast group information corresponding to each VLAN identifier that are stored in the AGG; classifying and combining, according to the VLAN identifier, the multicast join information in the GM LSP packet acquired by the processor 501, to obtain second multicast join information, where the second multicast join information is each VLAN identifier and multicast group information corresponding to each VLAN identifier that are in the GM LSP packet; and comparing the first multicast join information with the second multicast join information to obtain the comparison result, where the comparison result includes: when the first multicast join information is compared with the second multicast join information, and there is newly added multicast group information in a specific VLAN of the second multicast join information, the comparison result includes the newly added multicast group information; and when the first multicast join information is compared with the second multicast join information, and there is reduced multicast group information in a specific VLAN of the second multicast join information, the comparison result includes the reduced multicast group information; or
when the multicast join information in the GM LSP packet includes a VLAN identifier and multicast source information and multicast group information that are corresponding to the VLAN identifier, classifying and combining, according to the VLAN identifier, the multicast join information stored in the memory 502, to obtain first multicast join information, where the first multicast join information is each VLAN identifier and multicast source information and multicast group information corresponding to each VLAN identifier that are stored in the AGG; classifying and combining, according to the VLAN identifier, the multicast join information in the GM LSP packet acquired by the processor 501, to obtain second multicast join information, where the second multicast join information is each VLAN identifier and multicast source information and multicast group information corresponding to each VLAN identifier that are stored in the GM LSP packet; and comparing the first multicast join information with the second multicast join information to obtain the comparison result, where the comparison result includes: when the first multicast join information is compared with the second multicast join information, and there is newly added multicast source information and multicast group information in a specific VLAN of the second multicast join information, the comparison result includes the newly added multicast source information and multicast group information; and when the first multicast join information is compared with the second multicast join information, and there is reduced multicast source information and multicast group information in a specific VLAN of the second multicast join information, the comparison result includes the reduced multicast source information and multicast group information.

Optionally, when the preset-protocol packet is an IGMP packet, that the processor 501 executes the instruction and is configured to generate, according to the comparison result, a preset-protocol packet according to a preset format includes:
generating, according to the comparison result, an IGMP packet according to the preset format, where the preset format includes: a V1 format, a V2 format, or a V3 format, where V1, V2, and V3 are version numbers of the IGMP protocol.

Optionally, when the preset format is the V1 format or the V2 format, and there is the newly added multicast group information in the comparison result, that the processor 501 executes the instruction and is configured to generate, according to the comparison result, an IGMP packet according to the preset format includes:
generating a first IGMP report packet according to the newly added multicast join information in the comparison result, where the first IGMP report packet is generated according to the newly added multicast group information.

When the preset format is the V3 format, and when there is the newly added multicast group information in the comparison result, or there is the newly added multicast source information and multicast group information in the comparison result, that the processor 501 executes the instruction and is configured to generate, according to the comparison result, an IGMP packet according to the preset format includes:
generating an allow packet according to the newly added multicast join information in the comparison result, where the allow packet is generated according to the newly added multicast group information or according to the newly added multicast source information and multicast group information.

When the preset format is the V1 format or the V2 format, and when there is the reduced multicast group information in the comparison result, that the processor 501 executes the instruction and is configured to generate, according to the comparison result, an IGMP packet according to the preset format includes:
generating a leave indication packet according to the reduced multicast join information in the comparison result, where the leave indication packet is generated according to the reduced multicast group information.

When the preset format is the V3 format, and when there is the reduced multicast group information in the comparison result, or there is the reduced multicast source information and multicast group information in the comparison result, that the processor 501 executes the instruction and is configured to generate, according to the comparison result, an IGMP packet according to the preset format includes:
generating a leave packet according to the reduced multicast join information in the comparison result, where the leave packet is generated according to the reduced multicast group information or according to the reduced multicast source information and multicast group information.

Optionally, when the preset format is the V2 format, or when the preset format is the V3 format, that the processor 501 executes the instruction and is configured to generate, according to the comparison result, an IGMP packet according to the preset format includes:
receiving a group-specific query packet sent by the first multicast router, where the group-specific query packet includes a specific VLAN identifier; and generating a second IGMP report packet according to the comparison result, where the second IGMP report packet is generated according to the updated multicast join information that is stored in the AGG and updated last time.

Optionally, when the preset-protocol packet is a PIM packet, and there is the newly added multicast group information in the comparison result, that the processor 501 executes the instruction and is configured to generate, according to the comparison result, a preset-protocol packet according to a preset format includes:
generating a PIM SM Join according to the newly added multicast join information in the comparison result, where the PIM SM Join is generated according to the newly added multicast group information.

When there is the newly added multicast source information and multicast group information in the comparison result, that the processor 501 executes the instruction and is configured to generate, according to the comparison result, a preset-protocol packet according to a preset format includes:
generating a PIM SSM Join according to the newly added multicast join information in the comparison result, where the PIM SSM Join is generated according to the added multicast source information and multicast group information.

When there is the reduced multicast group information in the comparison result, that the processor 501 executes the instruction and is configured to generate, according to the comparison result, a preset-protocol packet according to a preset format includes:
generating a PIM SM Prune according to the reduced multicast join information in the comparison result, where the PIM SM Prune is used to delete the reduced multicast group information.

When there is the reduced multicast source information and multicast group information in the comparison result, that the processor 501 executes the instruction and is configured to generate, according to the comparison result, a preset-protocol packet according to a preset format includes:
generating the PIM SSM Prune according to the reduced multicast join information in the comparison result, where the PIM SSM Prune is used to delete the reduced multicast source information and multicast group information.

It may be clearly understood by a person skilled in the art that, for the purpose of convenient and brief description, for a specific step of the method described above, reference may be made to a corresponding process in the foregoing aggregation switch embodiments, and details are not described herein again.

It should be noted that, in the network encoding method provided in the embodiments of the present invention, a sequence of steps may be adjusted appropriately, and a step may also be added or removed based on circumstances. Any variation readily figured out by a person skilled in the art within the technical scope disclosed in the present invention shall fall within the protection scope of the present invention, which is not further described herein.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of hardware in addition to a software functional unit.

## Claims

1. A multicast communications method, applied to an aggregation switch, AGG, and comprising:
acquiring (101) a multicast group address link state protocol data unit, GM LSP, packet sent by an access switch, ACC, wherein the ACC is connected to a receiver of a multicast group, and the AGG is an aggregation point of multiple ACCs;
comparing (102) multicast join information in the GM LSP packet with multicast join information that is stored in the AGG and updated last time, to obtain a comparison result, and updating, according to the comparison result, the multicast join information stored in the AGG;
when there is changed multicast join information in the comparison result, generating (103), according to the comparison result, a preset-protocol packet according to a preset format, wherein the preset-protocol packet is an Internet Group Management Protocol, IGMP, packet or a Protocol Independent Multicast, PIM, packet; and
sending (104) the preset-protocol packet to a first multicast router, so that the first multicast router generates a multicast forwarding entry according to the preset-protocol packet.

2. The method according to claim 1, wherein
the GM LSP packet is a Transparent Interconnection of Lots of Links, TRILL, LSP packet; and the multicast join information in the GM LSP packet comprises: a virtual local area network, VLAN, identifier and multicast group information corresponding to the VLAN identifier, or the multicast join information in the GM LSP packet comprises: a VLAN identifier and multicast source information and multicast group information that are corresponding to the VLAN identifier.

3. The method according to claim 1 or 2, wherein the comparing multicast join information in the GM LSP packet with multicast join information that is stored in the AGG and updated last time, to obtain a comparison result comprises:
when the multicast join information in the GM LSP packet comprises a VLAN identifier and multicast group information corresponding to the VLAN identifier,
classifying and combining, according to the VLAN identifier, the multicast join information that is stored in the AGG and updated last time, to obtain first multicast join information, wherein the first multicast join information is each VLAN identifier and multicast group information corresponding to each VLAN identifier that are stored in the AGG;
classifying and combining, according to the VLAN identifier, the multicast join information in the GM LSP packet, to obtain second multicast join information, wherein the second multicast join information is each VLAN identifier and multicast group information corresponding to each VLAN identifier that are in the GM LSP packet; and
comparing the first multicast join information with the second multicast join information to obtain the comparison result, wherein the comparison result comprises:
when the first multicast join information is compared with the second multicast join information, and there is newly added multicast group information in a specific VLAN of the second multicast join information, the comparison result comprises the newly added multicast group information; and
when the first multicast join information is compared with the second multicast join information, and there is reduced multicast group information in a specific VLAN of the second multicast join information, the comparison result comprises the reduced multicast group information; or
when the multicast join information in the GM LSP packet comprises a VLAN identifier and multicast source information and multicast group information that are corresponding to the VLAN identifier,
classifying and combining, according to the VLAN identifier, the multicast join information that is stored in the AGG and updated last time, to obtain first multicast join information, wherein the first multicast join information is each VLAN identifier and multicast source information and multicast group information corresponding to each VLAN identifier that are stored in the AGG;
classifying and combining, according to the VLAN identifier, the multicast join information in the GM LSP packet, to obtain second multicast join information, wherein the second multicast join information is each VLAN identifier and multicast source information and multicast group information corresponding to each VLAN identifier that are stored in the GM LSP packet; and
comparing the first multicast join information with the second multicast join information to obtain the comparison result, wherein the comparison result comprises:
when the first multicast join information is compared with the second multicast join information, and there is newly added multicast source information and multicast group information in a specific VLAN of the second multicast join information, the comparison result comprises the newly added multicast source information and multicast group information; and
when the first multicast join information is compared with the second multicast join information, and there is reduced multicast source information and multicast group information in a specific VLAN of the second multicast join information, the comparison result comprises the reduced multicast source information and multicast group information.

4. The method according to claim 3, wherein when the preset-protocol packet is an IGMP packet, the generating, according to the comparison result, a preset-protocol packet according to a preset format comprises:
generating, by the AGG according to the comparison result, an IGMP packet according to the preset format, wherein the preset format comprises: a V1 format, a V2 format, or a V3 format, wherein V1, V2, and V3 are IGMP version numbers.

5. The method according to claim 4, wherein
when the preset format is the V1 format or the V2 format, and there is the newly added multicast group information in the comparison result, the generating, according to the comparison result, an IGMP packet according to the preset format comprises:
generating, by the AGG, a first IGMP report packet according to the newly added multicast join information in the comparison result, wherein the first IGMP report packet is generated according to the newly added multicast group information;
when the preset format is the V3 format, and there is the newly added multicast group information in the comparison result, or there is the newly added multicast source information and multicast group information in the comparison result, the generating, according to the comparison result, an IGMP packet according to the preset format comprises:
generating, by the AGG, an allow packet according to the newly added multicast join information in the comparison result, wherein the allow packet is generated according to the newly added multicast group information or according to the newly added multicast source information and multicast group information;
when the preset format is the V1 format or the V2 format, and when there is the reduced multicast group information in the comparison result, the generating, according to the comparison result, an IGMP packet according to the preset format comprises:
generating, by the AGG, a leave indication packet according to the reduced multicast join information in the comparison result, wherein the leave indication packet is generated according to the reduced multicast group information; and
when the preset format is the V3 format, and when there is the reduced multicast group information in the comparison result, or there is the reduced multicast source information and multicast group information in the comparison result, the generating, according to the comparison result, an IGMP packet according to the preset format comprises:
generating, by the AGG, a leave packet according to the reduced multicast join information in the comparison result, wherein the leave packet is generated according to the reduced multicast group information or according to the reduced multicast source information and multicast group information.

6. The method according to claim 4, wherein
when the preset format is the V2 format, or when the preset format is the V3 format, the generating, according to the comparison result, an IGMP packet according to the preset format comprises:
receiving, by the AGG, a group-specific query packet sent by the first multicast router, wherein the group-specific query packet comprises a specific VLAN identifier; and
generating, by the AGG, a second IGMP report packet according to the comparison result, wherein the second IGMP report packet is generated according to the updated multicast join information that is stored in the AGG.

7. The method according to claim 4, wherein when the preset-protocol packet is a PIM packet,
when there is the newly added multicast group information in the comparison result, the generating, according to the comparison result, a preset-protocol packet according to a preset format comprises:
generating, by the AGG, a Protocol Independent Multicast service join message, PIM SM Join, according to the newly added multicast join information in the comparison result, wherein the PIM SM Join is generated according to the newly added multicast group information;
when there is the newly added multicast source information and multicast group information in the comparison result, the generating, according to the comparison result, a preset-protocol packet according to a preset format comprises:
generating, by the AGG, a Protocol independent multicast source specific join message, PIM SSM Join, according to the newly added multicast join information in the comparison result, wherein the PIM SSM Join is generated according to the newly added multicast source information and multicast group information;
when there is the reduced multicast group information in the comparison result, the generating, according to the comparison result, a preset-protocol packet according to a preset format comprises:
generating, by the AGG, a Protocol Independent Multicast service prune message, PIM SM Prune, according to the reduced multicast join information in the comparison result, wherein the PIM SM Prune is used to delete the reduced multicast group information; and
when there is the reduced multicast source information and multicast group information in the comparison result, the generating, according to the comparison result, a preset-protocol packet according to a preset format comprises:
generating, by the AGG, a protocol independent multicast source specific multicast prune message, PIM SSM Prune message, according to the reduced multicast join information in the comparison result, wherein the PIM SSM Prune is used to delete the reduced multicast source information and multicast group information.

8. An aggregation switch, AGG, comprising:
an acquiring unit (401), configured to acquire a multicast group address link state protocol data unit, GM LSP, packet sent by an access switch, ACC, wherein the ACC is connected to a receiver of a multicast group, and the AGG is an aggregation point of multiple ACCs;
a storage unit (402), configured to store multicast join information that is updated last time;
a comparing unit (403), configured to: compare multicast join information in the GM LSP packet acquired by the acquiring unit with the multicast join information in the storage unit, to obtain a comparison result, send the comparison result to a generating unit, and update the multicast join information in the storage unit according to the comparison result;
the generating unit (404), configured to: receive the comparison result sent by the comparing unit, and when there is changed multicast join information in the comparison result, generate, according to the comparison result, a preset-protocol packet according to a preset format, wherein the preset-protocol packet is an Internet Group Management Protocol, IGMP, packet or a Protocol Independent Multicast, PIM, packet; and
a sending unit (405), configured to send the preset-protocol packet generated by the generating unit to a first multicast router, so that the first multicast router generates a multicast forwarding entry according to the preset-protocol packet.

9. The AGG according to claim 8, wherein
the GM LSP packet is a Transparent Interconnection of Lots of Links, TRILL, LSP packet; and the multicast join information in the GM LSP packet comprises: a virtual local area network, VLAN, identifier and multicast group information corresponding to the VLAN identifier, or the multicast join information in the GM LSP packet comprises: a VLAN identifier and multicast source information and multicast group information that are corresponding to the VLAN identifier.

10. The AGG according to claim 8 or 9, wherein the comparing unit is specifically configured to:
when the multicast join information in the GM LSP packet comprises a VLAN identifier and multicast group information corresponding to the VLAN identifier,
classify and combine, according to the VLAN identifier, the multicast join information stored in the storage unit, to obtain first multicast join information, wherein the first multicast join information is each VLAN identifier and multicast group information corresponding to each VLAN identifier that are stored in the AGG;
classify and combine, according to the VLAN identifier, the multicast join information in the GM LSP packet acquired by the acquiring unit, to obtain second multicast join information, wherein the second multicast join information is each VLAN identifier and multicast group information corresponding to each VLAN identifier that are in the GM LSP packet; and
compare the first multicast join information with the second multicast join information to obtain the comparison result, wherein the comparison result comprises:
when the first multicast join information is compared with the second multicast join information, and there is newly added multicast group information in a specific VLAN of the second multicast join information, the comparison result comprises the newly added multicast group information; and
when the first multicast join information is compared with the second multicast join information, and there is reduced multicast group information in a specific VLAN of the second multicast join information, the comparison result comprises the reduced multicast group information; or
when the multicast join information in the GM LSP packet comprises a VLAN identifier and multicast source information and multicast group information that are corresponding to the VLAN identifier,
classify and combine, according to the VLAN identifier, the multicast join information stored in the storage unit, to obtain first multicast join information, wherein the first multicast join information is each VLAN identifier and multicast source information and multicast group information corresponding to each VLAN identifier that are stored in the AGG;
classify and combine, according to the VLAN identifier, the multicast join information in the GM LSP packet acquired by the acquiring unit, to obtain second multicast join information, wherein the second multicast join information is each VLAN identifier and multicast source information and multicast group information corresponding to each VLAN identifier that are stored in the GM LSP packet; and
compare the first multicast join information with the second multicast join information to obtain the comparison result, wherein the comparison result comprises:
when the first multicast join information is compared with the second multicast join information, and there is newly added multicast source information and multicast group information in a specific VLAN of the second multicast join information, the comparison result comprises the newly added multicast source information and multicast group information; and
when the first multicast join information is compared with the second multicast join information, and there is reduced multicast source information and multicast group information in a specific VLAN of the second multicast join information, the comparison result comprises the reduced multicast source information and multicast group information.

11. The AGG according to claim 10, wherein when the preset-protocol packet is an IGMP packet, the generating unit is specifically configured to:
receive the comparison result sent by the comparing unit, and generate, according to the comparison result, an IGMP packet according to the preset format, wherein the preset format comprises: a V1 format, a V2 format, or a V3 format, wherein V1, V2, and V3 are version numbers of the IGMP protocol.

12. The AGG according to claim 11, wherein
when the preset format is the V1 format or the V2 format, and there is the newly added multicast group information in the comparison result, the generating unit is specifically configured to:
receive the comparison result sent by the comparing unit, and generate a first IGMP report packet according to the newly added multicast join information in the comparison result, wherein the first IGMP report packet is generated according to the newly added multicast group information;
when the preset format is the V3 format, and there is the newly added multicast group information in the comparison result or there is the newly added multicast source information and multicast group information in the comparison result, the generating unit is specifically configured to:
receive the comparison result sent by the comparing unit, and generate an allow packet according to the newly added multicast join information in the comparison result, wherein the allow packet is generated according to the newly added multicast group information or according to the newly added multicast source information and multicast group information;
when the preset format is the V1 format or the V2 format, and when there is the reduced multicast group information in the comparison result, the generating unit is specifically configured to:
receive the comparison result sent by the comparing unit, and generate a leave indication packet according to the reduced multicast join information in the comparison result, wherein the leave indication packet is generated according to the reduced multicast group information; and
when the preset format is the V3 format, and when there is the reduced multicast group information in the comparison result, or there is the reduced multicast source information and multicast group information in the comparison result, the generating unit is specifically configured to:
receive the comparison result sent by the comparing unit, and generate a leave packet according to the reduced multicast join information in the comparison result, wherein the leave packet is generated according to the reduced multicast group information or according to the reduced multicast source information and multicast group information.

13. The AGG according to claim 11, wherein
when the preset format is the V2 format, or when the preset format is the V3 format, the generating unit is specifically configured to:
receive a group-specific query packet sent by the first multicast router, wherein the group-specific query packet comprises a specific VLAN identifier; and
generate a second IGMP report packet according to the comparison result, wherein the second IGMP report packet is generated according to the updated multicast join information.

14. The AGG according to claim 11, wherein when the preset-protocol packet is a PIM packet,
when there is the newly added multicast group information in the comparison result, the generating unit is specifically configured to:
receive the comparison result of the comparing unit, and generate a Protocol Independent Multicast service join message, PIM SM Join, according to the newly added multicast join information in the comparison result, wherein the PIM SM Join is generated according to the newly added multicast group information;
when there is the newly added multicast source information and multicast group information in the comparison result, the generating unit is specifically configured to:
receive the comparison result of the comparing unit, and generate a Protocol Independent Multicast source specific join message, PIM SSM Join, according to the newly added multicast join information in the comparison result, wherein the PIM SSM Join is generated according to the newly added multicast source information and multicast group information;
when there is the reduced multicast group information in the comparison result, the generating unit is specifically configured to:
receive the comparison result of the comparing unit, and generate a Protocol Independent Multicast service prune message, PIM SM Prune, according to the reduced multicast join information in the comparison result, wherein the PIM SM Prune is used to delete the reduced multicast group information; and
when there is the reduced multicast source information and multicast group information in the comparison result, the generating unit is specifically configured to:
receive the comparison result of the comparing unit, and generate a Protocol Independent Multicast source specific multicast prune message, PIM SSM Prune, according to the reduced multicast join information in the comparison result, wherein the PIM SSM Prune is used to delete the reduced multicast source information and multicast group information.

## Patentansprüche

1. Multicast-Kommunikationsverfahren, das auf einen Aggregationsschalter, AGG angewendet wird, und Folgendes umfasst:
Erlangen (101) eines Multicast-Gruppenadressen-Anbindungszustands-Protokolldateneinheit-, GM LSP (Multicast Group Address Link State Protocol), Paketes, das durch einen Zugangsschalter, ACC (Access Switch), gesendet wird, wobei der ACC mit einem Empfänger einer Multicast-Gruppe verbunden ist, und es sich bei dem AGG um einen Aggregationspunkt von zahlreichen ACCs handelt;
Vergleichen (102) von Multicast-Zusammenschlussinformationen in dem GM LSP-Paket mit Multicast-Zusammenschlussinformationen, die in dem AGG gespeichert sind und das letzte Mal aktualisiert wurden, um ein Vergleichsergebnis zu erzielen, und Aktualisieren, gemäß dem Vergleichsergebnis, der Multicast-Zusammenschlussinformationen, die in dem AGG gespeichert sind;
wenn veränderte Multicast-Zusammenschlussinformationen in dem Vergleichsergebnis vorliegen, Erzeugen (103), gemäß dem Vergleichsergebnis, eines Voreinstellungsprotokollpaketes gemäß einem Voreinstellungsformat, wobei es sich bei dem Voreinstellungsprotokollpaket um ein Internetgruppenverwaltungsprotokoll-, IGMP (Internet Group Management Protocol), Paket oder ein protokollunabhängiges Multicast-, PIM (Protocol Independent Multicast), Paket handelt; und
Senden (104) des Voreinstellungsprotokollpaketes an einen ersten Multicast-Router, so dass der erste Multicast-Router einen Multicast-Weiterleitungseintrag gemäß dem Voreinstellungsprotokollpaket erzeugt.

2. Verfahren nach Anspruch 1, wobei
es sich bei dem GM LSP-Paket um ein transparente Zwischenverbindung von vielen Anbindungen-, TRILL (Transparent Interconnection of Lots of Links), LSP-Paket handelt; und die Multicast-Zusammenschlussinformationen in dem GM LSP-Paket Folgendes umfassen: eine virtuelle lokale Bereichsnetzwerk-, VLAN (Virtual Local Area Network), Identifizierung und Multicast-Gruppeninformationen entsprechend der VLAN-Identifizierung, oder die Multicast-Zusammenschlussinformationen in dem GM LSP-Paket Folgendes umfassen: eine VLAN-Identifizierung und Multicast-Quelleninformationen und Multicast-Gruppeninformationen, die der VLAN-Identifizierung entsprechen.

3. Verfahren nach Anspruch 1 oder 2, wobei das Vergleichen von Multicast-Zusammenschlussinformationen in dem GM LSP-Paket mit Multicast-Zusammenschlussinformationen, die in dem AGG gespeichert sind und das letzte Mal aktualisiert wurden, um ein Vergleichsergebnis zu erzielen, Folgendes umfasst:
wenn die Multicast-Zusammenschlussinformationen in dem GM LSP-Paket eine VLAN-Identifizierung und Multicast-Gruppeninformationen entsprechend der VLAN-Identifizierung umfassen,
Klassifizieren und Kombinieren, gemäß der VLAN-Identifizierung, der Multicast-Zusammenschlussinformationen, die in dem AGG gespeichert sind und das letzte Mal aktualisiert wurden, um erste Multicast-Zusammenschlussinformationen zu erhalten, wobei es sich bei den ersten Multicast-Zusammenschlussinformationen um jede VLAN-Identifizierung und die Multicast-Gruppeninformationen entsprechend jeder VLAN-Identifizierung handelt, die in dem AGG gespeichert sind;
Klassifizieren und Kombinieren, gemäß der VLAN-Identifizierung, der Multicast-Zusammenschlussinformationen in dem GM LSP-Paket, um zweite Multicast-Zusammenschlussinformationen zu erhalten, wobei es sich bei den zweiten Multicast-Zusammenschlussinformationen um jede VLAN-Identifizierung und Multicast-Gruppeninformationen entsprechend jeder VLAN-Identifizierung handelt, die in dem GM LSP-Paket vorhanden sind; und
Vergleichen der ersten Multicast-Zusammenschlussinformationen mit den zweiten Multicast-Zusammenschlussinformationen, um das Vergleichsergebnis zu erhalten, wobei das Vergleichsergebnis Folgendes umfasst:
wenn die ersten Multicast-Zusammenschlussinformationen mit den zweiten Multicast-Zusammenschlussinformationen verglichen werden, und neu hinzugefügte Multicast-Gruppeninformationen in einem speziellen VLAN der zweiten Multicast-Zusammenschlussinformationen vorhanden sind, das Vergleichsergebnis die neu hinzugefügten Multicast-Gruppeninformationen umfasst; und
wenn die ersten Multicast-Zusammenschlussinformationen mit den zweiten Multicast-Zusammenschlussinformationen verglichen werden, und reduzierte Multicast-Gruppeninformationen in einem speziellen VLAN der zweiten Multicast-Zusammenschlussinformationen vorhanden sind, das Vergleichsergebnis die reduzierten Multicast-Gruppeninformationen umfasst; oder
wenn die Multicast-Zusammenschlussinformationen in dem GM LSP-Paket eine VLAN-Identifizierung und Multicast-Quelleninformationen und Multicast-Gruppeninformationen umfassen, die der VLAN-Identifizierung entsprechen, Klassifizieren und Kombinieren, gemäß der VLAN-Identifizierung, der Multicast-Zusammenschlussinformationen, die in dem AGG gespeichert sind und das letzte Mal aktualisiert wurden, um erste Multicast-Zusammenschlussinformationen zu erhalten, wobei es sich bei den ersten Multicast-Zusammenschlussinformationen um jede VLAN-Identifizierung und Multicast-Quelleninformationen und Multicast-Gruppeninformationen entsprechend jeder VLAN-Identifizierung handelt, die in dem AGG gespeichert sind;
Klassifizieren und Kombinieren, gemäß der VLAN-Identifizierung, der Multicast-Zusammenschlussinformationen in dem GM LSP-Paket, um zweite Multicast-Zusammenschlussinformationen zu erhalten, wobei es sich bei den zweiten Multicast-Zusammenschlussinformationen um jede VLAN-Identifizierung und die Multicast-Quelleninformationen und Multicast-Gruppeninformationen entsprechend jeder VLAN-Identifizierung handelt, die in dem GM LSP-Paket gespeichert sind; und
Vergleichen der ersten Multicast-Zusammenschlussinformationen mit den zweiten Multicast-Zusammenschlussinformationen, um das Vergleichsergebnis zu erhalten, wobei das Vergleichsergebnis Folgendes umfasst:
wenn die ersten Multicast-Zusammenschlussinformationen mit den zweiten Multicast-Zusammenschlussinformationen verglichen werden, und neu hinzugefügte Multicast-Quelleninformationen und Multicast-Gruppeninformationen in einem speziellen VLAN der zweiten Multicast-Zusammenschlussinformationen vorhanden sind, das Vergleichsergebnis die neu hinzugefügten Multicast-Quelleninformationen und Multicast-Gruppeninformationen umfasst; und
wenn die ersten Multicast-Zusammenschlussinformationen mit den zweiten Multicast-Zusammenschlussinformationen verglichen werden, und reduzierte Multicast-Quelleninformationen und Multicast-Gruppeninformationen in einem speziellen VLAN der zweiten Multicast-Zusammenschlussinformationen vorhanden sind, das Vergleichsergebnis die reduzierten Multicast-Quelleninformationen und Multicast-Gruppeninformationen umfasst.

4. Verfahren nach Anspruch 3, wobei, wenn es sich bei dem Voreinstellungsprotokollpaket um ein IGMP-Paket handelt, das Erzeugen, gemäß dem Vergleichsergebnis, eines Voreinstellungsprotokollpaketes gemäß einem Voreinstellungsformat Folgendes umfasst:
Erzeugen, durch den AGG gemäß dem Vergleichsergebnis, eines IGMP-Paketes gemäß dem Voreinstellungsformat, wobei das Voreinstellungsformat Folgendes umfasst: ein V1-Format, ein V2-Format oder ein V3-Format, wobei es sich bei V1, V2 und V3 um IGMP-Versionsnummern handelt.

5. Verfahren nach Anspruch 4, wobei
wenn es sich bei dem Voreinstellungsformat um das V1-Format oder das V2-Format handelt, und neu hinzugefügte Multicast-Gruppeninformationen in dem Vergleichsergebnis vorhanden sind, das Erzeugen, gemäß dem Vergleichsergebnis, eines IGMP-Paketes gemäß dem Voreinstellungsformat Folgendes umfasst:
Erzeugen, durch den AGG, eines ersten IGMP-Berichtspaketes gemäß den neu hinzugefügten Multicast-Zusammenschlussinformationen in dem Vergleichsergebnis, wobei das erste IGMP-Berichtspaket gemäß den neu hinzugefügten Multicast-Gruppeninformationen erzeugt wird;
wenn es sich bei dem Voreinstellungsformat um das V3-Format handelt, und die neu hinzugefügten Multicast-Gruppeninformationen in dem Vergleichsergebnis vorhanden sind, oder die neu hinzugefügten Multicast-Quelleninformationen und Multicast-Gruppeninformationen in dem Vergleichsergebnis vorhanden sind, das Erzeugen, gemäß dem Vergleichsergebnis, eines IGMP-Paketes gemäß dem Voreinstellungsformat Folgendes umfasst:
Erzeugen, durch den AGG, eines Erlaubnispaketes gemäß den neu hinzugefügten Multicast-Zusammenschlussinformationen in dem Vergleichsergebnis, wobei das Erlaubnispaket gemäß den neu hinzugefügten Multicast-Gruppeninformationen oder gemäß den neu hinzugefügten Multicast-Quelleninformationen und Multicast-Gruppeninformationen erzeugt wird;
wenn es sich bei dem Voreinstellungsformat um das V1-Format oder das V2-Format handelt, und wenn die reduzierten Multicast-Gruppeninformationen in dem Vergleichsergebnis vorhanden sind, das Erzeugen, gemäß dem Vergleichsergebnis, eines IGMP-Paketes gemäß dem Voreinstellungsformat Folgendes umfasst:
Erzeugen, durch den AGG, eines Verlassenhinweispaketes gemäß den reduzierten Multicast-Zusammenschlussinformationen in dem Vergleichsergebnis, wobei das erste Verlassenhinweispaket gemäß den reduzierten Multicast-Gruppeninformationen erzeugt wird; und
wenn es sich bei dem Voreinstellungsformat um das V3-Format handelt, und wenn die reduzierten Multicast-Gruppeninformationen in dem Vergleichsergebnis vorhanden sind, oder die reduzierten Multicast-Quelleninformationen und Multicast-Gruppeninformationen in dem Vergleichsergebnis vorhanden sind, das Erzeugen, gemäß dem Vergleichsergebnis, eines IGMP-Paketes gemäß dem Voreinstellungsformat Folgendes umfasst:
Erzeugen, durch den AGG, eines Verlassenpaketes gemäß den reduzierten Multicast-Zusammenschlussinformationen in dem Vergleichsergebnis, wobei das Verlassenpaket gemäß den reduzierten Multicast-Gruppeninformationen oder gemäß den reduzierten Multicast-Quelleninformationen und Multicast-Gruppeninformationen erzeugt wird.

6. Verfahren nach Anspruch 4, wobei
wenn es sich bei dem Voreinstellungsformat um das V2-Format handelt, oder wenn es sich bei dem Voreinstellungsformat um das V3-Format handelt, das Erzeugen, gemäß dem Vergleichsergebnis, eines IGMP-Paketes gemäß dem Voreinstellungsformat Folgendes umfasst:
Empfangen, durch den AGG, eines gruppenspezifischen Abfragepaketes, das durch den ersten Multicast-Router gesendet wird, wobei das gruppenspezifische Abfragepaket eine spezielle VLAN-Identifizierung umfasst; und
Erzeugen, durch den AGG, eines zweiten IGMP-Berichtspaketes gemäß dem Vergleichsergebnis, wobei das zweite IGMP-Berichtspaket gemäß den aktualisierten Multicast-Zusammenschlussinformationen erzeugt wird, die in dem AGG gespeichert sind.

7. Verfahren nach Anspruch 4, wobei, wenn es sich bei dem Voreinstellungsprotokollpaket um ein PIM-Paket handelt,
wenn neu hinzugefügte Multicast-Gruppeninformationen in dem Vergleichsergebnis vorhanden sind, das Erzeugen, gemäß dem Vergleichsergebnis, eines Voreinstellungsprotokollpaketes gemäß dem Voreinstellungsformat Folgendes umfasst:
Erzeugen, durch den AGG, einer protokollunabhängigen Multicast-Dienstzusammenschlussmitteilung, PIM SM-Zusammenschluss, gemäß den neu hinzugefügten Multicast-Zusammenschlussinformationen in dem Vergleichsergebnis, wobei der PIM SM-Zusammenschluss gemäß den neu hinzugefügten Multicast-Gruppeninformationen erzeugt wird;
wenn neu hinzugefügte Multicast-Quelleninformationen und Multicast-Gruppeninformationen in dem Vergleichsergebnis vorhanden sind, das Erzeugen, gemäß dem Vergleichsergebnis, eines Voreinstellungsprotokollpaketes gemäß dem Voreinstellungsformat Folgendes umfasst:
Erzeugen, durch den AGG, einer protokollunabhängigen Multicast quellenspezifischen Zusammenschlussmitteilung, PIM SSM-Zusammenschluss, gemäß den neu hinzugefügten Multicast-Zusammenschlussinformationen in dem Vergleichsergebnis, wobei der PIM SSM-Zusammenschluss gemäß den neu hinzugefügten Multicast-Quelleninformationen und Multicast-Gruppeninformationen erzeugt wird;
wenn reduzierte Multicast-Gruppeninformationen in dem Vergleichsergebnis vorhanden sind, das Erzeugen, gemäß dem Vergleichsergebnis, eines Voreinstellungsprotokollpaketes gemäß einem Voreinstellungsformat Folgendes umfasst:
Erzeugen, durch den AGG, einer protokollunabhängigen Multicast-Dienstbeschneidungsmitteilung, PIM SM-Beschneidung, gemäß den reduzierten Multicast-Zusammenschlussinformationen in dem Vergleichsergebnis, wobei die PIM SM-Beschneidung dazu verwendet wird, die reduzierten Multicast-Gruppeninformationen zu löschen; und
wenn die reduzierten Multicast-Quelleninformationen und Multicast-Gruppeninformationen in dem Vergleichsergebnis vorhanden sind, das Erzeugen, gemäß dem Vergleichsergebnis, eines Voreinstellungsprotokollpaketes gemäß einem Voreinstellungsformat Folgendes umfasst:
Erzeugen, durch den AGG, einer protokollunabhängigen Multicast quellenspezifischen Multicast-Beschneidungsmitteilung, PIM SSM-Beschneidungsmitteilung, gemäß den reduzierten Multicast-Zusammenschlussinformationen in dem Vergleichsergebnis, wobei die PIM SSM-Beschneidung dazu verwendet wird, die reduzierten Multicast-Quelleninformationen und Multicast-Gruppeninformationen zu löschen.

8. Aggregationsschalter, AGG, der Folgendes umfasst:
eine Erlangungseinheit (401), die dazu ausgestaltet ist, ein Multicast-Gruppenadressen-Anbindungszustands-Protokolldateneinheit-, GM LSP, Paket zu erlangen, das durch einen Zugangsschalter, ACC, gesendet wird, wobei der ACC mit einem Empfänger einer Multicast-Gruppe verbunden ist, und es sich bei dem AGG um einen Aggregationspunkt von zahlreichen ACCs handelt;
eine Speicherungseinheit (402), die dazu ausgestaltet ist, die Multicast-Zusammenschlussinformationen zu speichern, die das letzte Mal aktualisiert wurden; eine Vergleichseinheit (403), die dazu ausgestaltet ist: Multicast-Zusammenschlussinformationen in dem GM LSP-Paket zu vergleichen, das durch die Erlangungseinheit mit den Multicast-Zusammenschlussinformationen in der Speicherungseinheit erlangt wurde, um ein Vergleichsergebnis zu erhalten, das Vergleichsergebnis an eine Erzeugungseinheit zu senden, und die Multicast-Zusammenschlussinformationen in der Speicherungseinheit gemäß dem Vergleichsergebnis zu aktualisieren;
die Erzeugungseinheit (404), die dazu ausgestaltet ist: das Vergleichsergebnis zu empfangen, das durch die Vergleichseinheit gesendet wird, und wenn die veränderten Multicast-Zusammenschlussinformationen in dem Vergleichsergebnis vorhanden sind, gemäß dem Vergleichsergebnis, ein Voreinstellungsprotokollpaket gemäß einem Voreinstellungsformat zu erzeugen, wobei es sich bei dem Voreinstellungsprotokollpaket um ein Internetgruppenverwaltungsprotokoll-, IGMP, Paket oder ein protokollunabhängiges Multicast-, PIM, Paket handelt; und
eine Sendeeinheit (405), die dazu ausgestaltet ist, das Voreinstellungsprotokollpaket, das durch die Erzeugungseinheit erzeugt wird, an einen ersten Multicast-Router zu senden, so dass der erste Multicast-Router einen Multicast-Weiterleitungseintrag gemäß dem Voreinstellungsprotokollpaket erzeugt.

9. AGG nach Anspruch 8, wobei
es sich bei dem GM LSP-Paket um ein transparenter Zwischenverbindung von vielen Anbindungen-, TRILL, LSP-Paket handelt; und die Multicast-Zusammenschlussinformationen in dem GM LSP-Paket Folgendes umfassen: eine virtuelle lokale Bereichsnetzwerk-, VLAN, Identifizierung und Multicast-Gruppeninformationen entsprechend der VLAN-Identifizierung, oder die Multicast-Zusammenschlussinformationen in dem GM LSP-Paket Folgendes umfassen: eine VLAN-Identifizierung und Multicast-Quelleninformationen und Multicast-Gruppeninformationen, die der VLAN-Identifizierung entsprechen.

10. AGG nach Anspruch 8 oder 9, wobei die Vergleichseinheit speziell dazu ausgestaltet ist:
wenn die Multicast-Zusammenschlussinformationen in dem GM LSP-Paket eine VLAN-Identifizierung und Multicast-Gruppeninformationen entsprechend der VLAN-Identifizierung umfassen,
Klassifizieren und Kombinieren, gemäß der VLAN-Identifizierung, der Multicast-Zusammenschlussinformationen, die in der Speicherungseinheit gespeichert sind, um erste Multicast-Zusammenschlussinformationen zu erhalten, wobei es sich bei den ersten Multicast-Zusammenschlussinformationen um jede VLAN-Identifizierung und die Multicast-Gruppeninformationen entsprechend jeder VLAN-Identifizierung handelt, die in dem AGG gespeichert sind;
Klassifizieren und Kombinieren, gemäß der VLAN-Identifizierung, der Multicast-Zusammenschlussinformationen in dem GM LSP-Paket, die durch die Erlangungseinheit erlangt wurden, um zweite Multicast-Zusammenschlussinformationen zu erhalten, wobei es sich bei den zweiten Multicast-Zusammenschlussinformationen um jede VLAN-Identifizierung und Multicast-Gruppeninformationen entsprechend jeder VLAN-Identifizierung handelt, die in dem GM LSP-Paket sind; und
Vergleichen der ersten Multicast-Zusammenschlussinformationen mit den zweiten Multicast-Zusammenschlussinformationen, um das Vergleichsergebnis zu erhalten, wobei das Vergleichsergebnis Folgendes umfasst:
wenn die ersten Multicast-Zusammenschlussinformationen mit den zweiten Multicast-Zusammenschlussinformationen verglichen werden, und neu hinzugefügte Multicast-Gruppeninformationen in einem speziellen VLAN der zweiten Multicast-Zusammenschlussinformationen vorhanden sind, das Vergleichsergebnis die neu hinzugefügten Multicast-Gruppeninformationen umfasst; und
wenn die ersten Multicast-Zusammenschlussinformationen mit den zweiten Multicast-Zusammenschlussinformationen verglichen werden, und reduzierte Multicast-Gruppeninformationen in einem speziellen VLAN der zweiten Multicast-Zusammenschlussinformationen vorhanden sind, das Vergleichsergebnis die reduzierten Multicast-Gruppeninformationen umfasst; oder
wenn die Multicast-Zusammenschlussinformationen in dem GM LSP-Paket eine VLAN-Identifizierung und Multicast-Quelleninformationen und Multicast-Gruppeninformationen umfassen, die der VLAN-Identifizierung entsprechen, Klassifizieren und Kombinieren, gemäß der VLAN-Identifizierung, der Multicast-Zusammenschlussinformationen, die in der Speicherungseinheit gespeichert sind, um erste Multicast-Zusammenschlussinformationen zu erhalten, wobei es sich bei den ersten Multicast-Zusammenschlussinformationen um jede VLAN-Identifizierung und Multicast-Quelleninformationen und Multicast-Gruppeninformationen entsprechend jeder VLAN-Identifizierung handelt, die in dem AGG gespeichert sind;
Klassifizieren und Kombinieren, gemäß der VLAN-Identifizierung, der Multicast-Zusammenschlussinformationen in dem GM LSP-Paket, die durch die Erlangungseinheit erlangt werden, um zweite Multicast-Zusammenschlussinformationen zu erhalten, wobei es sich bei den zweiten Multicast-Zusammenschlussinformationen um jede VLAN-Identifizierung und Multicast-Quelleninformationen und Multicast-Gruppeninformationen entsprechend jeder VLAN-Identifizierung handelt, die in dem GM LSP-Paket gespeichert sind; und
Vergleichen der ersten Multicast-Zusammenschlussinformationen mit den zweiten Multicast-Zusammenschlussinformationen, um das Vergleichsergebnis zu erhalten, wobei das Vergleichsergebnis Folgendes umfasst:
wenn die ersten Multicast-Zusammenschlussinformationen mit den zweiten Multicast-Zusammenschlussinformationen verglichen werden, und neu hinzugefügte Multicast-Quelleninformationen und Multicast-Gruppeninformationen in einem speziellen VLAN der zweiten Multicast-Zusammenschlussinformationen vorhanden sind, das Vergleichsergebnis die neu hinzugefügten Multicast-Quelleninformationen und Multicast-Gruppeninformationen umfasst; und
wenn die ersten Multicast-Zusammenschlussinformationen mit den zweiten Multicast-Zusammenschlussinformationen verglichen werden, und reduzierte Multicast-Quelleninformationen und Multicast-Gruppeninformationen in einem speziellen VLAN der zweiten Multicast-Zusammenschlussinformationen vorhanden sind, das Vergleichsergebnis die reduzierten Multicast-Quelleninformationen und Multicast-Gruppeninformationen umfasst.

11. AGG nach Anspruch 10, wobei, wenn es sich bei dem Voreinstellungsprotokollpaket um ein IGMP-Paket handelt, die Erzeugungseinheit speziell dazu ausgestaltet ist:
das Vergleichsergebnis zu empfangen, das durch die Vergleichseinheit gesendet wird, und gemäß dem Vergleichsergebnis, ein IGMP-Paket gemäß dem Voreinstellungsformat zu erzeugen, wobei das Voreinstellungsformat Folgendes umfasst: ein V1-Format, eine V2-Format oder ein V3-Format, wobei es sich bei V1, V2 und V3 um Versionsnummern des IGMP-Protokolls handelt.

12. AGG nach Anspruch 11, wobei
wenn es sich bei dem Voreinstellungsformat um das V1-Format oder das V2-Format handelt, und die neu hinzugefügten Multicast-Gruppeninformationen in dem Vergleichsergebnis vorhanden sind, die Erzeugungseinheit speziell dazu ausgestaltet ist:
das Vergleichsergebnis zu empfangen, das durch die Vergleichseinheit gesendet wird, und ein erstes IGMP-Berichtspaket gemäß den neuen hinzugefügten Multicast-Zusammenschlussinformationen in dem Vergleichsergebnis zu erzeugen, wobei das erste IGMP-Berichtspaket gemäß den neu hinzugefügten Multicast-Gruppeninformationen erzeugt wird;
wenn es sich bei dem Voreinstellungsformat um das V3-Format handelt, und die neu hinzugefügten Multicast-Gruppeninformationen in dem Vergleichsergebnis vorhanden sind, oder die neu hinzugefügten Multicast-Quelleninformationen und Multicast-Gruppeninformationen in dem Vergleichsergebnis vorhanden sind, die Erzeugungseinheit speziell dazu ausgestaltet ist:
das Vergleichsergebnis zu empfangen, das durch die Vergleichseinheit gesendet wird, und ein Erlaubnispaket gemäß den neuen hinzugefügten Multicast-Zusammenschlussinformationen in dem Vergleichsergebnis zu erzeugen, wobei das Erlaubnispaket gemäß den neu hinzugefügten Multicast-Gruppeninformationen oder gemäß den neu hinzugefügten Multicast-Quelleninformationen und Multicast-Gruppeninformationen erzeugt wird;
wenn es sich bei dem Voreinstellungsformat um das V1-Format oder das V2-Format handelt, und wenn die neu hinzugefügten Multicast-Gruppeninformationen in dem Vergleichsergebnis vorhanden sind, die Erzeugungseinheit speziell dazu ausgestaltet ist:
das Vergleichsergebnis zu empfangen, das durch die Vergleichseinheit gesendet wird, und ein Verlassenhinweispaket gemäß den reduzierten Multicast-Zusammenschlussinformationen in dem Vergleichsergebnis zu erzeugen, wobei das Verlassenhinweispaket gemäß den reduzierten Multicast-Gruppeninformationen erzeugt wird; und
wenn es sich bei dem Voreinstellungsformat um das V3-Format handelt, und wenn die reduzierten Multicast-Gruppeninformationen in dem Vergleichsergebnis vorhanden sind, oder die reduzierten Multicast-Quelleninformationen und Multicast-Gruppeninformationen in dem Vergleichsergebnis vorhanden sind, die Erzeugungseinheit speziell dazu ausgestaltet ist:
das Vergleichsergebnis zu empfangen, das durch die Vergleichseinheit gesendet wird, und ein Verlassenpaket gemäß den reduzierten Multicast-Zusammenschlussinformationen in dem Vergleichsergebnis zu erzeugen, wobei das Verlassenpaket gemäß den reduzierten Multicast-Gruppeninformationen oder gemäß den reduzierten Multicast-Quelleninformationen und Multicast-Gruppeninformationen erzeugt wird.

13. AGG nach Anspruch 11, wobei
wenn es sich bei dem Voreinstellungsformat um das V2-Format handelt, oder wenn es sich bei dem Voreinstellungsformat um das V3-Format handelt, die Erzeugungseinheit speziell dazu ausgestaltet ist:
ein gruppenspezifisches Abfragepaket zu empfangen, das durch den ersten Multicast-Router gesendet wird, wobei das gruppenspezifische Abfragepaket eine spezielle VLAN-Identifizierung umfasst; und
ein zweites IGMP-Berichtspaket gemäß dem Vergleichsergebnis zu erzeugen, wobei das zweite IGMP-Berichtspaket gemäß den aktualisierten Multicast-Zusammenschlussinformationen erzeugt wird.

14. AGG nach Anspruch 11, wobei, wenn es sich bei dem Voreinstellungsprotokollpaket um ein PIM-Paket handelt,
wenn die neu hinzugefügten Multicast-Gruppeninformationen in dem Vergleichsergebnis vorhanden sind, die Erzeugungseinheit speziell dazu ausgestaltet ist:
das Vergleichsergebnis der Vergleichseinheit zu empfangen, und eine protokollunabhängige Multicast-Dienstzusammenschlussmitteilung, PIM SM-Zusammenschluss, gemäß den neu hinzugefügten Multicast-Zusammenschlussinformationen in dem Vergleichsergebnis zu erzeugen, wobei der PIM SM-Zusammenschluss gemäß den neu hinzugefügten Multicast-Gruppeninformationen erzeugt wird;
wenn die neu hinzugefügten Multicast-Quelleninformationen und Multicast-Gruppeninformationen in dem Vergleichsergebnis vorhanden sind, die Erzeugungseinheit speziell dazu ausgestaltet ist:
das Vergleichsergebnis der Vergleichseinheit zu empfangen, und eine protokollunabhängige Multicast-quellenspezifische Zusammenschlussmitteilung, PIM SSM-Zusammenschluss, gemäß den neu hinzugefügten Multicast-Zusammenschlussinformationen in dem Vergleichsergebnis zu erzeugen, wobei der PIM SSM-Zusammenschluss gemäß den neu hinzugefügten Multicast-Quelleninformationen und Multicast-Gruppeninformationen erzeugt wird;
wenn die reduzierten Multicast-Gruppeninformationen in dem Vergleichsergebnis vorhanden sind, die Erzeugungseinheit speziell dazu ausgestaltet ist:
das Vergleichsergebnis der Vergleichseinheit zu empfangen, und eine protokollunabhängige Multicast-Dienstbeschneidungsmitteilung, PIM SM-Beschneidung, gemäß den reduzierten Multicast-Zusammenschlussinformationen in dem Vergleichsergebnis zu erzeugen, wobei die PIM SM-Beschneidung dazu verwendet wird, die reduzierten Multicast-Gruppeninformationen zu löschen; und
wenn die reduzierten Multicast-Quelleninformationen und Multicast-Gruppeninformationen in dem Vergleichsergebnis vorhanden sind, die Erzeugungseinheit speziell dazu ausgestaltet ist:
das Vergleichsergebnis der Vergleichseinheit zu empfangen, und eine protokollunabhängige Multicast-quellenspezifische Multicast-Beschneidungsmitteilung, PIM SSM-Beschneidung, gemäß den reduzierten Multicast-Zusammenschlussinformationen in dem Vergleichsergebnis zu erzeugen, wobei die PIM SSM-Beschneidung dazu verwendet wird, die reduzierten Multicast-Quelleninformationen und Multicast-Gruppeninformationen zu löschen.

## Revendications

1. Procédé de communication en multidiffusion, appliqué à un commutateur d'agrégation, AGG, et comprenant les étapes suivantes :
acquérir (101) un paquet d'unité de données de protocole d'état de liaison d'adresse de groupe de multidiffusion, GM LSP, envoyé par un commutateur d'accès, ACC, l'ACC étant connecté à un récepteur d'un groupe de multidiffusion, et l'AGG étant un point d'agrégation de plusieurs ACC ;
comparer (102) des informations joindre un groupe de mutidiffusion dans le paquet GM LSP avec des informations joindre un groupe de multidiffusion qui sont stockées dans l'AGG et qui ont été mises à jour la fois précédente, pour obtenir un résultat de comparaison, et mettre à jour, selon le résultat de comparaison, les informations joindre un groupe de multidiffusion stockées dans l'AGG ;
lorsque le résultat de comparaison comporte des informations joindre un groupe de multidiffusion changées, générer (103), selon le résultat de comparaison, un paquet de protocole prédéfini selon un format prédéfini, le paquet de protocole prédéfini étant un paquet de protocole de gestion de groupe Internet, IGMP, ou un paquet de multidiffusion indépendante du protocole, PIM ; et
envoyer (104) le paquet de protocole prédéfini à un premier routeur de multidiffusion, pour que le premier routeur de multidiffusion génère une entrée d'acheminement de multidiffusion selon le paquet de protocole prédéfini.

2. Procédé selon la revendication 1, dans lequel le paquet GM LSP est un paquet d'interconnexion transparente d'un grand nombre de liaisons, TRILL, LSP ; et les informations joindre un groupe de multidiffusion dans le paquet GM LSP comprennent : un identifiant de réseau local virtuel, VLAN, et des informations de groupe de multidiffusion correspondant à l'identifiant VLAN, ou les informations joindre un groupe de multidiffusion dans le paquet GM LSP comprennent : un identifiant VLAN et des informations de source de multidiffusion et des informations de groupe de multidiffusion qui correspondent à l'identifiant VLAN.

3. Procédé selon la revendication 1 ou 2, dans lequel l'étape consistant à comparer des informations joindre un groupe de mutidiffusion dans le paquet GM LSP avec des informations joindre un groupe de multidiffusion qui sont stockées dans l'AGG et qui ont été mises à jour la fois précédente, pour obtenir un résultat de comparaison comprend :
lorsque les informations joindre un groupe de multidiffusion dans le paquet GM LSP comprennent un identifiant VLAN et des informations de groupe de multidiffusion correspondant à l'identifiant VLAN,
classifier et combiner, selon l'identifiant VLAN, les informations joindre un groupe de multidiffusion qui sont stockées dans l'AGG et qui ont été mises à jour la fois précédente, pour obtenir des premières informations joindre un groupe de multidiffusion, les premières informations joindre un groupe de multidiffusion étant chaque identifiant VLAN et des informations de groupe de multidiffusion correspondant à chaque identifiant VLAN qui sont stockées dans l'AGG ;
classifier et combiner, selon l'identifiant VLAN, les informations joindre un groupe de multidiffusion dans le paquet GM LSP, pour obtenir des deuxièmes informations joindre un groupe de multidiffusion, les deuxièmes informations joindre un groupe de multidiffusion étant chaque identifiant VLAN et des informations de groupe de multidiffusion correspondant à chaque identifiant VLAN qui sont dans le paquet GM LSP ; et
comparer les premières informations joindre un groupe de multidiffusion avec les deuxièmes informations joindre un groupe de multidiffusion pour obtenir le résultat de comparaison, le résultat de comparaison comprenant :
lorsque les premières informations joindre un groupe de multidiffusion sont comparées avec les deuxièmes informations joindre un groupe de multidiffusion, et qu'il existe des informations de groupe de multidiffusion nouvellement ajoutées dans un VLAN spécifique des deuxièmes informations joindre un groupe de multidiffusion, le résultat de comparaison comporte les informations de groupe de multidiffusion nouvellement ajoutées ; et
lorsque les premières informations joindre un groupe de multidiffusion sont comparées avec les deuxièmes informations joindre un groupe de multidiffusion, et qu'il existe des informations de groupe de multidiffusion réduites dans un VLAN spécifique des deuxièmes informations joindre un groupe de multidiffusion, le résultat de comparaison comporte les informations de groupe de multidiffusion réduites ; ou
lorsque les informations joindre un groupe de multidiffusion dans le paquet GM LSP comprennent un identifiant VLAN et des informations de source de multidiffusion et des informations de groupe de multidiffusion qui correspondent à l'identifiant VLAN,
classifier et combiner, selon l'identifiant VLAN, les informations joindre un groupe de multidiffusion qui sont stockées dans l'AGG et qui ont été mises à jour la fois précédente, pour obtenir des premières informations joindre un groupe de multidiffusion, les premières informations joindre un groupe de multidiffusion étant chaque identifiant VLAN et des informations de source de multidiffusion et des informations de groupe de multidiffusion correspondant à chaque identifiant VLAN qui sont stockées dans l'AGG ;
classifier et combiner, selon l'identifiant VLAN, les informations joindre un groupe de multidiffusion dans le paquet GM LSP, pour obtenir des deuxièmes informations joindre un groupe de multidiffusion, les deuxièmes informations joindre un groupe de multidiffusion étant chaque identifiant VLAN et des informations de source de multidiffusion et des informations de groupe de multidiffusion correspondant à chaque identifiant VLAN qui sont stockées dans le paquet GM LSP ; et
comparer les premières informations joindre un groupe de multidiffusion avec les deuxièmes informations joindre un groupe de multidiffusion pour obtenir le résultat de comparaison, le résultat de comparaison comprenant :
lorsque les premières informations joindre un groupe de multidiffusion sont comparées avec les deuxièmes informations joindre un groupe de multidiffusion, et qu'il existe des informations de source de multidiffusion et des informations de groupe de multidiffusion nouvellement ajoutées dans un VLAN spécifique des deuxièmes informations joindre un groupe de multidiffusion, le résultat de comparaison comporte les informations de source de multidiffusion et les informations de groupe de multidiffusion nouvellement ajoutées ; et
lorsque les premières informations joindre un groupe de multidiffusion sont comparées avec les deuxièmes informations joindre un groupe de multidiffusion, et qu'il existe des informations de source de multidiffusion et des informations de groupe de multidiffusion réduites dans un VLAN spécifique des deuxièmes informations joindre un groupe de multidiffusion, le résultat de comparaison comporte les informations de source de multidiffusion et les informations de groupe de multidiffusion réduites.

4. Procédé selon la revendication 3 dans lequel, lorsque le paquet de protocole prédéfini est un paquet IGMP, l'étape consistant à générer, selon le résultat de comparaison, un paquet de protocole prédéfini selon un format prédéfini comprend :
générer, par l'AGG selon le résultat de comparaison, un paquet IGMP selon le format prédéfini, le format prédéfini comprenant : un format V1, un format V2, ou un format V3, où V1, V2, et V3 sont des numéros de version IGMP.

5. Procédé selon la revendication 4 dans lequel, lorsque le format prédéfini est le format V1 ou le format V2, et que le résultat de comparaison comporte les informations de groupe de multidiffusion nouvellement ajoutées, l'étape consistant à générer, selon le résultat de comparaison, un paquet IGMP selon le format prédéfini comprend :
générer, par l'AGG, un premier paquet de rapport IGMP selon les informations joindre un groupe de multidiffusion nouvellement ajoutées dans le résultat de comparaison, le premier paquet de rapport IGMP étant généré selon les informations de groupe de multidiffusion nouvellement ajoutées ;
lorsque le format prédéfini est le format V3, et que le résultat de comparaison comporte les informations de groupe de multidiffusion nouvellement ajoutées, ou que le résultat de comparaison comporte les informations de source de multidiffusion et les informations de groupe de multidiffusion nouvellement ajoutées, l'étape consistant à générer, selon le résultat de comparaison, un paquet IGMP selon le format prédéfini comprend :
générer, par l'AGG, un paquet d'autorisation selon les informations joindre un groupe de multidiffusion nouvellement ajoutées dans le résultat de comparaison, le paquet d'autorisation étant généré selon les informations de groupe de multidiffusion nouvellement ajoutées ou selon les informations de source de multidiffusion et les informations de groupe de multidiffusion nouvellement ajoutées ;
lorsque le format prédéfini est le format V1 ou le format V2, et lorsque le résultat de comparaison comporte les informations de groupe de multidiffusion réduites, l'étape consistant à générer, selon le résultat de comparaison, un paquet IGMP selon le format prédéfini comprend :
générer, par l'AGG, un paquet d'indication quitter selon les informations joindre un groupe de multidiffusion réduites dans le résultat de comparaison, le paquet d'indication quitter étant généré selon les informations de groupe de multidiffusion réduites ; et
lorsque le format prédéfini est le format V3, et lorsque le résultat de comparaison comporte les informations de groupe de multidiffusion réduites, ou que le résultat de comparaison comporte les informations de source de multidiffusion et les informations de groupe de multidiffusion réduites, l'étape consistant à générer, selon le résultat de comparaison, un paquet IGMP selon le format prédéfini comprend :
générer, par l'AGG, un paquet quitter selon les informations joindre un groupe de multidiffusion réduites dans le résultat de comparaison, le paquet quitter étant généré selon les informations de groupe de multidiffusion réduites ou selon les informations de source de multidiffusion et les informations de groupe de multidiffusion réduites.

6. Procédé selon la revendication 4 dans lequel, lorsque le format prédéfini est le format V2, ou lorsque le format prédéfini est le format V3, l'étape consistant à générer, selon le résultat de comparaison, un paquet IGMP selon le format prédéfini comprend :
recevoir, par l'AGG, un paquet de requête spécifique au groupe envoyé par le premier routeur de multidiffusion, le paquet de requête spécifique au groupe comportant un identifiant VLAN spécifique ; et
générer, par l'AGG, un deuxième paquet de rapport IGMP selon le résultat de comparaison, le deuxième paquet de rapport IGMP étant généré selon les informations joindre un groupe de mutidiffusion mises à jour qui sont stockées dans l'AGG.

7. Procédé selon la revendication 4 dans lequel, lorsque le paquet de protocole prédéfini est un paquet PIM,
lorsque le résultat de comparaison comporte les informations de groupe de multidiffusion nouvellement ajoutées, l'étape consistant à générer, selon le résultat de comparaison, un paquet de protocole prédéfini selon un format prédéfini comprend :
générer, par l'AGG, un message joindre un service de multidiffusion indépendante du protocole, PIM SM Join, selon les informations joindre un groupe de multidiffusion nouvellement ajoutées dans le résultat de comparaison, le PIM SM Join étant généré selon les informations de groupe de multidiffusion nouvellement ajoutées ;
lorsque le résultat de comparaison comporte les informations de source de multidiffusion et les informations de groupe de multidiffusion nouvellement ajoutées, l'étape consistant à générer, selon le résultat de comparaison, un paquet de protocole prédéfini selon un format prédéfini comprend :
générer, par l'AGG, un message joindre spécifique à la source de multidiffusion indépendante du protocole, PIM SSM Join, selon les informations joindre un groupe de multidiffusion nouvellement ajoutées dans le résultat de comparaison, le PIM SSM Join étant généré selon les informations de source de multidiffusion et les informations de groupe de multidiffusion nouvellement ajoutées ;
lorsque le résultat de comparaison comporte les informations de groupe de multidiffusion réduites, l'étape consistant à générer, selon le résultat de comparaison, un paquet de protocole prédéfini selon un format prédéfini comprend :
générer, par l'AGG, un message élaguer le service de multidiffusion indépendante du protocole, PIM SM Prune, selon les informations joindre un groupe de multidiffusion réduites dans le résultat de comparaison, le PIM SM Prune étant utilisé pour supprimer les informations de groupe de multidiffusion réduites ; et
lorsque le résultat de comparaison comporte les informations de source de multidiffusion et les informations de groupe de multidiffusion réduites, l'étape consistant à générer, selon le résultat de comparaison, un paquet de protocole prédéfini selon un format prédéfini comprend :
générer, par l'AGG, un message élaguer la multidiffusion spécifique à la source de multidiffusion indépendante du protocole, PIM SSM Prune, selon les informations joindre un groupe de multidiffusion réduites dans le résultat de comparaison, le PIM SSM Prune étant utilisé pour supprimer les informations de source de multidiffusion et les informations de groupe de multidiffusion réduites.

8. Commutateur d'agrégation, AGG, comprenant :
une unité d'acquisition (401), configurée pour acquérir un paquet d'unité de données de protocole d'état de liaison d'adresse de groupe de multidiffusion, GM LSP, envoyé par un commutateur d'accès, ACC, l'ACC étant connecté à un récepteur d'un groupe de multidiffusion, et l'AGG étant un point d'agrégation de plusieurs ACC ;
une unité de stockage (402), configurée pour stocker des informations joindre un groupe de multidiffusion qui ont été mises à jour la fois précédente ;
une unité de comparaison (403), configurée pour : comparer des informations joindre un groupe de multidiffusion dans le paquet GM LSP acquis par l'unité d'acquisition avec les informations joindre un groupe de multidiffusion dans l'unité de stockage, pour obtenir un résultat de comparaison, envoyer le résultat de comparaison à une unité de génération, et mettre à jour les informations joindre un groupe de multidiffusion dans l'unité de stockage selon le résultat de comparaison ;
l'unité de génération (404), configurée pour : recevoir le résultat de comparaison envoyé par l'unité de comparaison, et lorsque le résultat de comparaison comporte des informations joindre un groupe de multidiffusion changées, générer, selon le résultat de comparaison, un paquet de protocole prédéfini selon un format prédéfini, le paquet de protocole prédéfini étant un paquet de protocole de gestion de groupe Internet, IGMP, ou un paquet de multidiffusion indépendante du protocole, PIM ; et
une unité d'envoi (405), configurée pour envoyer le paquet de protocole prédéfini généré par l'unité de génération à un premier routeur de multidiffusion, pour que le premier routeur de multidiffusion génère une entrée d'acheminement de multidiffusion selon le paquet de protocole prédéfini.

9. AGG selon la revendication 8, dans lequel le paquet GM LSP est un paquet d'interconnexion transparente d'un grand nombre de liaisons, TRILL, LSP ; et les informations joindre un groupe de multidiffusion dans le paquet GM LSP comprennent : un identifiant de réseau local virtuel, VLAN, et des informations de groupe de multidiffusion correspondant à l'identifiant VLAN, ou les informations joindre un groupe de multidiffusion dans le paquet GM LSP comprennent : un identifiant VLAN et des informations de source de multidiffusion et des informations de groupe de multidiffusion qui correspondent à l'identifiant VLAN.

10. AGG selon la revendication 8 ou 9, dans lequel l'unité de comparaison est configurée spécifiquement pour :
lorsque les informations joindre un groupe de multidiffusion dans le paquet GM LSP comprennent un identifiant VLAN et des informations de groupe de multidiffusion correspondant à l'identifiant VLAN,
classifier et combiner, selon l'identifiant VLAN, les informations joindre un groupe de multidiffusion stockées dans l'unité de stockage, pour obtenir des premières informations joindre un groupe de multidiffusion, les premières informations joindre un groupe de multidiffusion étant chaque identifiant VLAN et des informations de groupe de multidiffusion correspondant à chaque identifiant VLAN qui sont stockées dans l'AGG ;
classifier et combiner, selon l'identifiant VLAN, les informations joindre un groupe de multidiffusion dans le paquet GM LSP acquis par l'unité d'acquisition, pour obtenir des deuxièmes informations joindre un groupe de multidiffusion, les deuxièmes informations joindre un groupe de multidiffusion étant chaque identifiant VLAN et des informations de groupe de multidiffusion correspondant à chaque identifiant VLAN qui sont dans le paquet GM LSP ; et
comparer les premières informations joindre un groupe de multidiffusion avec les deuxièmes informations joindre un groupe de multidiffusion pour obtenir le résultat de comparaison, le résultat de comparaison comprenant :
lorsque les premières informations joindre un groupe de multidiffusion sont comparées aux deuxièmes informations joindre un groupe de multidiffusion, et qu'il existe des informations de groupe de multidiffusion nouvellement ajoutées dans un VLAN spécifique des deuxièmes informations joindre un groupe de multidiffusion, le résultat de comparaison comporte les informations de groupe de multidiffusion nouvellement ajoutées ; et
lorsque les premières informations joindre un groupe de multidiffusion sont comparées avec les deuxièmes informations joindre un groupe de multidiffusion, et qu'il existe des informations de groupe de multidiffusion réduites dans un VLAN spécifique des deuxièmes informations joindre un groupe de multidiffusion, le résultat de comparaison comporte les informations de groupe de multidiffusion réduites ; ou
lorsque les informations joindre un groupe de multidiffusion dans le paquet GM LSP comprennent un identifiant VLAN et des informations de source de multidiffusion et des informations de groupe de multidiffusion qui correspondent à l'identifiant VLAN,
classifier et combiner, selon l'identifiant VLAN, les informations joindre un groupe de multidiffusion stockées dans l'unité de stockage, pour obtenir des premières informations joindre un groupe de multidiffusion, les premières informations joindre un groupe de multidiffusion étant chaque identifiant VLAN et des informations de source de multidiffusion et des informations de groupe de multidiffusion correspondant à chaque identifiant VLAN qui sont stockées dans l'AGG ;
classifier et combiner, selon l'identifiant VLAN, les informations joindre un groupe de multidiffusion dans le paquet GM LSP acquis par l'unité d'acquisition, pour obtenir des deuxièmes informations joindre un groupe de multidiffusion, les deuxièmes informations joindre un groupe de multidiffusion étant chaque identifiant VLAN et des informations de source de multidiffusion et des informations de groupe de multidiffusion correspondant à chaque identifiant VLAN qui sont stockées dans le paquet GM LSP ; et
comparer les premières informations joindre un groupe de multidiffusion avec les deuxièmes informations joindre un groupe de multidiffusion pour obtenir le résultat de comparaison, le résultat de comparaison comprenant :
lorsque les premières informations joindre un groupe de multidiffusion sont comparées avec les deuxièmes informations joindre un groupe de multidiffusion, et qu'il existe des informations de source de multidiffusion et des informations de groupe de multidiffusion nouvellement ajoutées dans un VLAN spécifique des deuxièmes informations joindre un groupe de multidiffusion, le résultat de comparaison comporte les informations de source de multidiffusion et les informations de groupe de multidiffusion nouvellement ajoutées ; et
lorsque les premières informations joindre un groupe de multidiffusion sont comparées avec les deuxièmes informations joindre un groupe de multidiffusion, et qu'il existe des informations de source de multidiffusion et des informations de groupe de multidiffusion réduites dans un VLAN spécifique des deuxièmes informations joindre un groupe de multidiffusion, le résultat de comparaison comporte les informations de source de multidiffusion et les informations de groupe de multidiffusion réduites.

11. AGG selon la revendication 10 dans lequel, lorsque le paquet de protocole prédéfini est un paquet IGMP, l'unité de génération est configurée spécifiquement pour :
recevoir le résultat de comparaison envoyé par l'unité de comparaison, et générer, selon le résultat de comparaison, un paquet IGMP selon le format prédéfini, le format prédéfini comprenant : un format V1, un format V2, ou un format V3, où V1, V2, et V3 sont des numéros de version du protocole IGMP.

12. AGG selon la revendication 11 dans lequel, lorsque le format prédéfini est le format V1 ou le format V2, et que le résultat de comparaison comporte les informations de groupe de multidiffusion nouvellement ajoutées, l'unité de génération est configurée spécifiquement pour :
recevoir le résultat de comparaison envoyé par l'unité de comparaison, et générer un premier paquet de rapport IGMP selon les informations joindre un groupe de multidiffusion nouvellement ajoutées dans le résultat de comparaison, le premier paquet de rapport IGMP étant généré selon les informations de groupe de multidiffusion nouvellement ajoutées ;
lorsque le format prédéfini est le format V3, et que le résultat de comparaison comporte les informations de groupe de multidiffusion nouvellement ajoutées, ou que le résultat de comparaison comporte les informations de source de multidiffusion et les informations de groupe de multidiffusion nouvellement ajoutées, l'unité de génération est configurée spécifiquement pour :
recevoir le résultat de comparaison envoyé par l'unité de comparaison, et générer un paquet d'autorisation selon les informations joindre un groupe de multidiffusion nouvellement ajoutées dans le résultat de comparaison, le paquet d'autorisation étant généré selon les informations de groupe de multidiffusion nouvellement ajoutées ou selon les informations de source de multidiffusion et les informations de groupe de multidiffusion nouvellement ajoutées ;
lorsque le format prédéfini est le format V1 ou le format V2, et lorsque le résultat de comparaison comporte les informations de groupe de multidiffusion réduites, l'unité de génération est configurée spécifiquement pour :
recevoir le résultat de comparaison envoyé par l'unité de comparaison, et générer un paquet d'indication quitter selon les informations joindre un groupe de multidiffusion réduites dans le résultat de comparaison, le paquet d'indication quitter étant généré selon les informations de groupe de multidiffusion réduites ; et
lorsque le format prédéfini est le format V3, et lorsque le résultat de comparaison comporte les informations de groupe de multidiffusion réduites, ou que le résultat de comparaison comporte les informations de source de multidiffusion et les informations de groupe de multidiffusion réduites, l'unité de génération est configurée spécifiquement pour :
recevoir le résultat de comparaison envoyé par l'unité de comparaison, et générer un paquet quitter selon les informations joindre un groupe de multidiffusion réduites dans le résultat de comparaison, le paquet quitter étant généré selon les informations de groupe de multidiffusion réduites ou selon les informations de source de multidiffusion et les informations de groupe de multidiffusion réduites.

13. AGG selon la revendication 11 dans lequel, lorsque le format prédéfini est le format V2, ou lorsque le format prédéfini est le format V3, l'unité de génération est configurée spécifiquement pour :
recevoir un paquet de requête spécifique au groupe envoyé par le premier routeur de multidiffusion, le paquet de requête spécifique au groupe comportant un identifiant VLAN spécifique ; et
générer un deuxième paquet de rapport IGMP selon le résultat de comparaison, le deuxième paquet de rapport IGMP étant généré selon les informations joindre un groupe de multidiffusion mises à jour.

14. AGG selon la revendication 11 dans lequel, lorsque le paquet de protocole prédéfini est un paquet PIM,
lorsque le résultat de comparaison comporte les informations de groupe de multidiffusion nouvellement ajoutées, l'unité de génération est configurée spécifiquement pour :
recevoir le résultat de comparaison de l'unité de comparaison, et générer un message joindre un service de multidiffusion indépendante du protocole, PIM SM Join, selon les informations joindre un groupe de multidiffusion nouvellement ajoutées dans le résultat de comparaison, le PIM SM Join étant généré selon les informations de groupe de multidiffusion nouvellement ajoutées ;
lorsque le résultat de comparaison comporte les informations de source de multidiffusion et les informations de groupe de multidiffusion nouvellement ajoutées, l'unité de génération est configurée spécifiquement pour :
recevoir le résultat de comparaison de l'unité de comparaison, et générer un message joindre spécifique à la source de multidiffusion indépendante du protocole, PIM SSM Join, selon les informations joindre un groupe de multidiffusion nouvellement ajoutées dans le résultat de comparaison, le PIM SSM Join étant généré selon les informations de source de multidiffusion et les informations de groupe de multidiffusion nouvellement ajoutées ;
lorsque le résultat de comparaison comporte les informations de groupe de multidiffusion réduites, l'unité de génération est configurée spécifiquement pour :
recevoir le résultat de comparaison de l'unité de comparaison, et générer un message élaguer le service de multidiffusion indépendante du protocole, PIM SM Prune, selon les informations joindre un groupe de multidiffusion réduites dans le résultat de comparaison, le PIM SM Prune étant utilisé pour supprimer les informations de groupe de multidiffusion réduites ; et
lorsque le résultat de comparaison comporte les informations de source de multidiffusion et les informations de groupe de multidiffusion réduites, l'unité de génération est configurée spécifiquement pour :
recevoir le résultat de comparaison de l'unité de comparaison, et générer un message élaguer la multidiffusion spécifique à la source de multidiffusion indépendante du protocole, PIM SSM Prune, selon les informations joindre un groupe de multidiffusion réduites dans le résultat de comparaison, le PIM SSM Prune étant utilisé pour supprimer les informations de source de multidiffusion et les informations de groupe de multidiffusion réduites.
